(19) Europäisches Patentamt
European Patent Office
Office européen des brevets

(11) **EP 4 247 114 B1**

(12) **EUROPEAN PATENT SPECIFICATION**

(45) Date of publication and mention
of the grant of the patent:
**01.07.2026 Bulletin 2026/27**

(51) International Patent Classification (IPC):
**H04W 76/10** (2018.01)    **H04W 76/27** (2018.01)
**H04W 8/22** (2009.01)    **H04W 76/28** (2018.01)

(21) Application number: **23190089.5**

(52) Cooperative Patent Classification (CPC):
**H04W 76/25; H04W 8/22; H04W 76/10;**
**H04W 76/20; H04W 76/27;** H04W 8/183;
H04W 60/005; H04W 76/15; H04W 76/28;
H04W 88/06

(22) Date of filing: **17.05.2021**

(54) **SIGNALING UNAVAILABILITY STATE CAPABILITY AND UNAVAILABILITY REQUESTS SUPPORT**

SIGNALISIERUNG DER UNVERFÜGBARKEITSZUSTANDSFÄHIGKEIT UND DER
UNVERFÜGBARKEITSANFRAGENUNTERSTÜTZUNG

SIGNALISATION DE LA CAPACITÉ D'INDISPONIBILITÉ ET PRISE EN CHARGE DES DEMANDES
D'INDISPONIBILITÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.05.2020 US 202063027790 P**

(43) Date of publication of application:
**20.09.2023 Bulletin 2023/38**

(62) Document number(s) of the earlier application(s) in
accordance with Art. 76 EPC:
**21727570.0 / 4 154 666**

(73) Proprietor: **Telefonaktiebolaget LM Ericsson**
**(publ)**
**164 83 Stockholm (SE)**

(72) Inventors:
• **CHEN, Qian**
**431 49 Mölndal (SE)**
• **LINDHEIMER, Christopfer**
**592 31 Vadstena (SE)**
• **SCHLIWA-BERTLING, Paul**
**585 71 Ljungsbro (SE)**
• **ROMMER, Stefan**
**426 74 Västra Frölunda (SE)**
• **TERZANI, Alessio**
**120 67 Stockholm (SE)**
• **STATTIN, Magnus**
**194 44 Upplands Väsby (SE)**

(74) Representative: **Ericsson**
**Patent Development**
**Torshamnsgatan 21-23**
**164 80 Stockholm (SE)**

(56) References cited:
**US-A1- 2012 058 748    US-A1- 2014 220 981**

• **"3rd Generation Partnership Project; Technical**
**Specification Group Services and System**
**Aspects; Study on system enablers for devices**
**having multiple Universal Subscriber Identity**
**Modules (USIM) (Release 17)", vol. SA WG2, no.**
**V0.3.0, 28 January 2020 (2020-01-28), pages 1 -**
**36, XP051860854, Retrieved from the Internet**
**<URL:ftp://ftp.3gpp.org/Specs/archive/**
**23_series/23.761/23761-030.zip**
**23761-030rm.doc> [retrieved on 20200128]**

**Description**

TECHNICAL FIELD

The present disclosure relates generally to communications, and more particularly to communication methods and related nodes and computer program products supporting wireless communications.

BACKGROUND

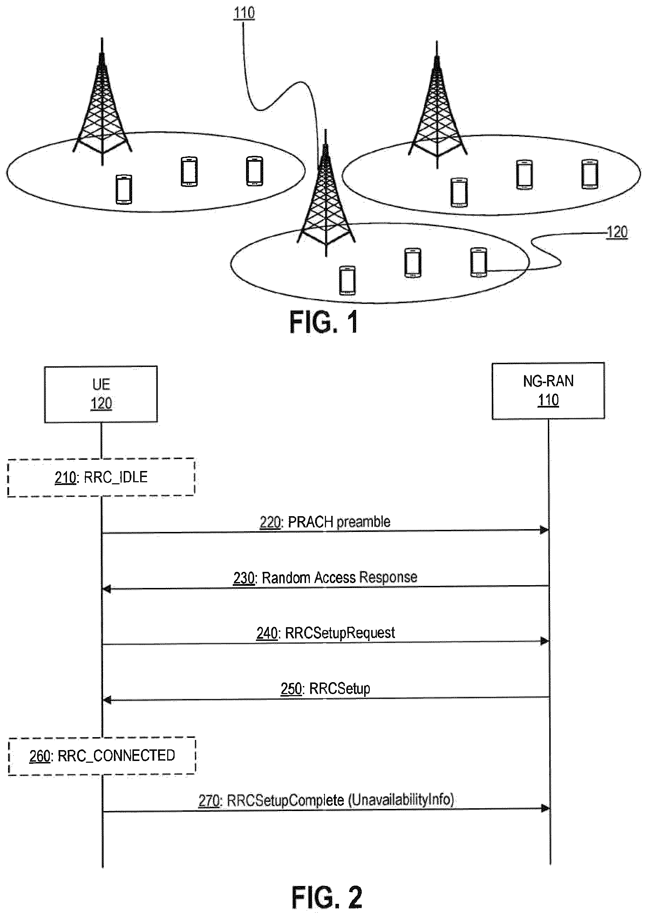

FIG. 1 illustrates a communication network with multiple network nodes 110 and communication devices 120. In some examples, a single network node may provide communication services via multiple public land mobile networks ("PLMN"). In additional or alternative examples, neighboring network nodes may each provide a single communication device with access to different PLMNs.
A single communication device (or user equipment ("UE")) can be capable of having two or more subscription credentials (e.g., subscriber identity modules ("SIMs")) and to act as two UEs within one device/hardware entity. Each subscriber credential may be associated with a specific PLMN. There is no standardized support for such UEs that, for example, make it easier for UEs to manage two or more subscriptions simultaneously.

Document 3GPP TR 23.761 V0.3.0 may be construed to disclose an evaluation of growing usage of Multi-USIM devices in the market, so that 3GPP is considering system enhancements that would allow better support of such devices.

Document US 2012 / 0 058 748 A1 may be construed to disclose a method and system for managing communication of a dual- standby portable terminal, in which upon generation of communication traffic with a first communication network among a plurality of communication networks, the portable terminal transmits a hold signal to a second communication network for which communication traffic has not been generated, other than the first communication network, and upon receipt of the hold signal, the second communication network restricts a communication connection to the portable terminal.

Document US 2014 / 0 220 981 A1 may be construed to disclose a method for UE to indicate its upcoming transceiver operation status to network and help network to avoid inefficient radio resource schedule for better network efficiency. The proposed method also helps network to manage the connections for user applications to prevent unnecessary disruption due to short-term radio link disconnection. The UE is a dual SIM dual standby (DSDS) UE. The UE first establishes an RRC connection and starts data transmission. Upon detecting a suspension event, the UE sends a signaling connection release indication (SCRI) with a new cause for "UE requested PS data suspension". The SCRI may further include a suspension reason and a suspension period. When the network receives the SCRI, it will interpret that the UE may not be able to receive its downlink signal during the upcoming period and may prevent schedule radio resource for the UE.

SUMMARY

According to the present disclosure, there are provided methods, a network node and a computer program product according to the independent claims.

According to a first aspect of the present disclosure, there is provided a method of operating a network node in a communication network. The method comprises receiving a radio resource control, RRC, connection setup request from a communication device, the RRC connection setup request indicating that the communication device is capable of entering an unavailable state; and responsive to receiving the RRC connection setup request, transmitting a second message indicating that the network node supports unavailability requests.

According to a second aspect of the present disclosure, there is provided a method of operating a network node in a communication network. The method comprises transmitting a radio resource connection, RRC, setup message to a communication device, indicating that the network node supports unavailability requests; and responsive to transmitting the RRC setup message, receiving a RRC connection setup confirmation from the communication device indicating that the communication device is capable of entering the unavailable state.

According to a third aspect of the present disclosure, there is provided a network node operating in a communication network. The network node comprises processing circuitry and memory coupled to the processing circuitry and having instructions stored therein that are executable by the processing circuitry to cause the network node to perform operations comprising any operations of the first or second aspect.

According to a fourth aspect of the present disclosure, there is provided a computer program product comprising a non-transitory storage medium including program code to be executed by processing circuitry of a network node operating in a communication network, whereby execution of the program code causes the network node to perform operations comprising any operations of the first or second aspect.

Whenever in the following disclosure any of the above-stated aspects (independent claims) is disclosed as "optional" (e.g. due to usage of conjunctive terms, such as "can", "may", "should" etc.), it is nevertheless to be read as "mandatory".

In various embodiments described herein, negotiating a transmission gap or unavailability duration for a UE connected to a network node can improve resource allocation by the network node while maintaining the connection with the UE.

BRIEF DESCRIPTION OF THE DRAWINGS

Hereinabove and in the following, "examples" pertain to principles underlying the claimed subject-matter and/or being useful for understanding the claimed subject-matter, while "embodiments" pertain to the claimed subject-matter within the claim scope. The accompanying drawings, which are included to provide a further understanding of the disclosure and are incorporated in and constitute a part of this application, illustrate certain non-limiting embodiments of inventive concepts. In the drawings:

FIG. 1 is a schematic diagram illustrating a telecommunications network according to an example;
FIG. 2 is signal flow diagram illustrating a communication device indicating in a radio resource control ("RRC") setup complete message that the UE is capable of transitioning between an available state and an unavailable state according to an example;
FIG. 3 is signal flow diagram illustrating a network node indicating in a RRC reconfiguration message that the network node supports unavailability requests according to an example;
FIG. 4 is signal flow diagram illustrating a communication device indicating in RRC reconfiguration complete message that the UE is capable of transitioning between an available state and an unavailable state according to an example;
FIGS. 5-6 are signal flow diagrams illustrating a communication device transmitting an unavailability request with a predetermined gap duration according to examples;
FIGS. 7-8 are signal flow diagrams illustrating a communication device transmitting an unavailability request with a non-predetermined gap duration according to examples;
FIG. 9 is a block diagram illustrating an unavailability request according to an example;
FIG. 10 is a block diagram illustrating a communication device according to an example;
FIG. 11 is a block diagram illustrating a radio access network ("RAN") node according to an embodiment of the present disclosure;
FIG. 12 is a block diagram illustrating a core network ("CN") node according to an example;
FIGS. 13-16 are flow charts illustrating processes performed by a network node according to examples. FIGS. 17 and 18 are flow charts illustrating processes performed by a network node according to embodiments of the present disclosure;
FIGS. 19-23 are flow charts illustrating processes performed by a communication device according to examples;
FIG. 24 is a block diagram of a wireless network according to an example;
FIG. 25 is a block diagram of a user equipment according to an example;
FIG. 26 is a block diagram of a virtualization environment according to an example;
FIG. 27 is a block diagram of a telecommunication network connected via an intermediate network to a host computer according to an example;
FIG. 28 is a block diagram of a host computer communicating via a base station with a user equipment over a partially wireless connection according to an example;
FIG. 29 is a block diagram of methods implemented in a communication system including a host computer, a base station and a user equipment according to an example;
FIG. 30 is a block diagram of methods implemented in a communication system including a host computer, a base station and a user equipment according to an example;
FIG. 31 is a block diagram of methods implemented in a communication system including a host computer, a base station and a user equipment according to an example; and
FIG. 32 is a block diagram of methods implemented in a communication system including a host computer, a base station and a user equipment according to an example.

Whenever in the following disclosure the term "embodiment" occurs, reference is to be made to the figure description above to clarify whether an embodiment or an example is meant.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

In some examples, a UE may be provided support to more easily switch between states related to use of a first subscription (e.g., a first universal subscriber identity module ("USIM") connecting to a first public land mobile network ("PLMN")) and states related to use of a second subscription (e.g., a second USIM connecting to a second PLMN). Such switching may not be necessary if the UE has the capability of communicating simultaneously towards two networks, using the first USIM and second USIM simultaneously. For this to work, there may be a need for at least dual receiver and transmitter chains, such that frequencies that are used towards both networks do not cause interference to each other and that radio separation is good enough not to cause, for example, IM effects in the device. Yet other aspects that can be addressed include introducing a signaling that allows a UE that cannot simultaneously communicate with, for example, two or more networks, to at least signal a network that it is leaving, or becoming unreachable for that network.

A multi-SIM UE with a single receiver ("Rx") processing unit/chain can receive transmissions from one PLMN at the time. To be able to maintain being registered in two systems simultaneously, the UE may need to be able to switch between the systems. In some examples, allowing the UE to switch between the systems can allow the UE to listen to pages in the "other" system, make cell reselection measurements and evaluations, and respond to pages.

The following are the formulas for calculating Paging Frame ("PF") and Paging Occasions ("POs"). System Frame Number ("SFN" for the PF is determined by:

5G:

$$(SFN + PF\_offset) \bmod T = (T \operatorname{div} N)*(UE\_ID \bmod N)$$

LTE:

$$SFN \bmod T = (T \operatorname{div} N)*(UE\_ID \bmod N)$$

Index (i_s), indicating the index of the PO is determined by:
i_s = floor (UE_ID/N) mod Ns
Where:

UE_ID: 5G-S-TMSI mod 1024          (in the 5GS)
UE_ID: IMSI mod 1024               (in the EPS)

Due to the mod 1024 operation in the UE_ID, the POs are determined only by the last 10 bits of the IMSI (EPS) or the 5G-S-TMSI (5GS).

Assuming that the two PLMNs are synchronized at SFN level, whenever the last 10 bits of the UE_ID in the PLMNs are the same, the PO of the two PLMN will be the same. This causes a paging collision, meaning that a single Rx UE listening for a paging message in one PLMN might miss the paging sent in the other PLMN, since it is sent at the same PO.

Measures to avoid this may be needed. However, the above is mainly addressing a situation when a UE is in CM_IDLE / RRC_IDLE, or possibly when a UE is in CM_CONNECTED / RRC_INACTIVE state in both two networks.

In situations when a UE in fact is communicating using, e.g., USIM1 towards PLMN1, it is in CM_CONNECTED and RRC_CONNECTED, there is no obvious way how a UE should be able to maintain a monitoring of paging transmissions in another PLMN (e.g., PLMN2), associated to connectivity using different subscription credentials (e.g., USIM2).

Various embodiments described herein address how to create interruptions or "gaps" in the communication for a UE that is communicating in CM_CONNECTED / RRC_CONNECTED mode with PLMN1 using credentials from USIM1. These gaps are then subsequently used by the UE to switch to another system (PLMN2) utilizing different subscription credentials (e.g., USIM2) to listen for pages.

In some embodiments, a UE, in communication with PLMN1, can signal to the NG-RAN node it is communicating with an unavailability request. The unavailability request is used by the NG-RAN node as a means to hold scheduling of data to that UE for the duration of the unavailability.

By taking into consideration the unavailability in the NG-RAN node, there may be reduced waste of transmission resources that otherwise would be used to transmit when the UE wouldn't receive anyway.

In some embodiments, the signaling of the unavailability request is an indication signaled over the MAC protocol layer. The indication is itself preconfigured to mean that the UE is unavailable for a certain period of time.

In additional or alternative embodiments, the signaling of the unavailability request indicates that the UE is unavailable until a return signal is transmitted by the UE to the network. In these examples, the unavailability duration is not pre-determined, but rather, the duration is stopped by a second signal. In additional or alternative embodiments, if the UE has not transmitted an unavailability stop signal before a certain duration, the NG-RAN node may consider the UE lost and transition the UE to RRC_IDLE. In additional or alternative embodiments, the network may assume that the UE is back after a predetermined unavailability duration (or timer) and it would start to schedule the user again. If there are no acknowledgements of transmitted data, then the network may assume that UE never returned and it would then be possible to release the connection, possibly even without sending a release message over RRC

One way for the UE to indicate that it has returned (unavailability stop signal) is through transmission of a buffer status report (BSR) indicating no data. This may be an indication to the network that unavailability is no longer valid, and the UE is back

In some embodiments, the UE, when being registered and monitoring two different PLMN's for pages, would, as soon as it is transitioning to RRC_CONNECTED in one of the systems, include in msg5 (RRCSetupComplete) one of the following: a request to be configured with the possibility to send unavailability requests, an indication that the UE may, while being in RRC_CONNECTED, send unavailability requests, or alternatively, an indication that registrations to other PLMN's or networks are present, and that the UE may leave.

Such an indication already in msg5 may allow the network to take into consideration that UE may need, for example, certain capabilities for being able to switch between different networks, which can be valuable since the network wouldn't then have to take into consideration that all UE's may send unavailability requests, some UE's may never do it, as they are not multi-SIM UE's.

It is further possible to take into consideration when the network sends reconfiguration message to UE, to make sure to configure UE such that unavailability requests would be possible.

In additional or alternative embodiments, the message from the UE is not transmitted in msg5, but rather in a reconfiguration complete message. The advantage of this is that it is only at this point that the UE would know if it is necessary to request unavailability, for example, in situations when, dependent on capability, it would be possible to actually simultaneously monitor both systems.

The gaps of unavailability are according to some embodiments being used by the UE to switch to the states associated with PLMN2 and USIM2 and to, for example, listening for paging. There can also be a power saving aspect related to this, for example, the UE may use similar unavailability requests to be able to, during short periods, switch into short power saving modes.

For example, if a UE indicates in, for example, msg5, that it wants to be configured with unavailability request possibility, then it may indicate to network that it is a UE that would need to be connected in a battery-saving mode and need dormant periods. Msg5 content can either be specific on cause for unavailability, or it can be generic, for example, allowing the UE to use the unavailability periods for whatever.

The unavailability signal can be sent in advance to be able to properly take into consideration in schedulers that certain UE's are not candidates for certain scheduling durations.

For the duration of unavailability, the state machine in the UE and in the network may remain the same. The UE will remain in RRC_CONNECTED and if returning within the period of unavailability allowed, (configured, or allowed as a timer value in the network) the UE will return to RRC_CONNECTED and scheduling will continue, potentially with missed data, this is dependent on the QoS requirements and the PDU flows associated to the data.

During the time when the UE is unavailable, this period may not be considered from a QoS perspective. Treatment of transmit buffers on the network side may be done in a proper way.

Some embodiments provide a signaling solution for requesting and coordinating unavailability gaps from the network to use to switch to other system and listen for paging or to use for power saving in UE. These embodiments can provide the advantage that it works when the UE is in CM_CONNECTED / RRC_CONNECTED mode with no waste of resources due to that UE is not listening.

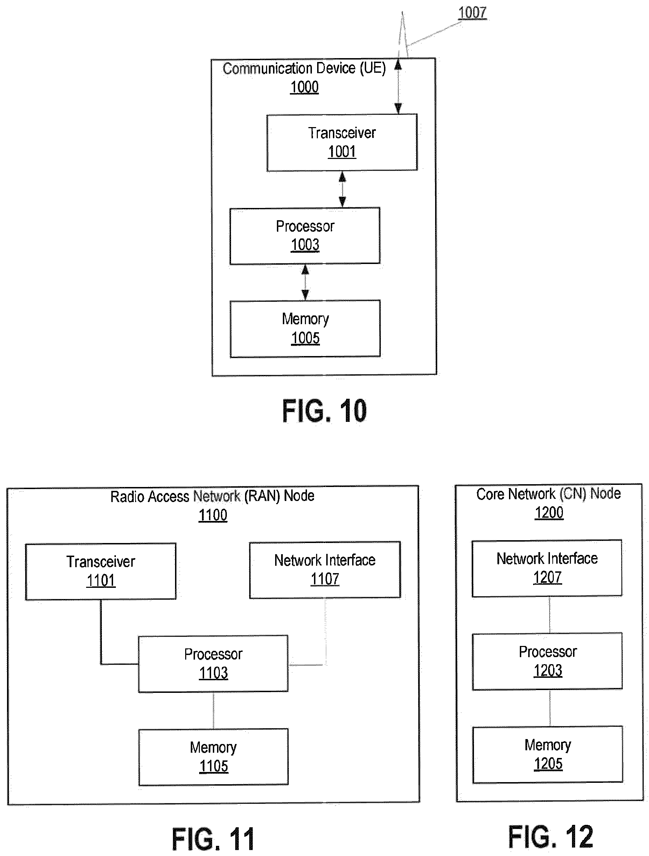

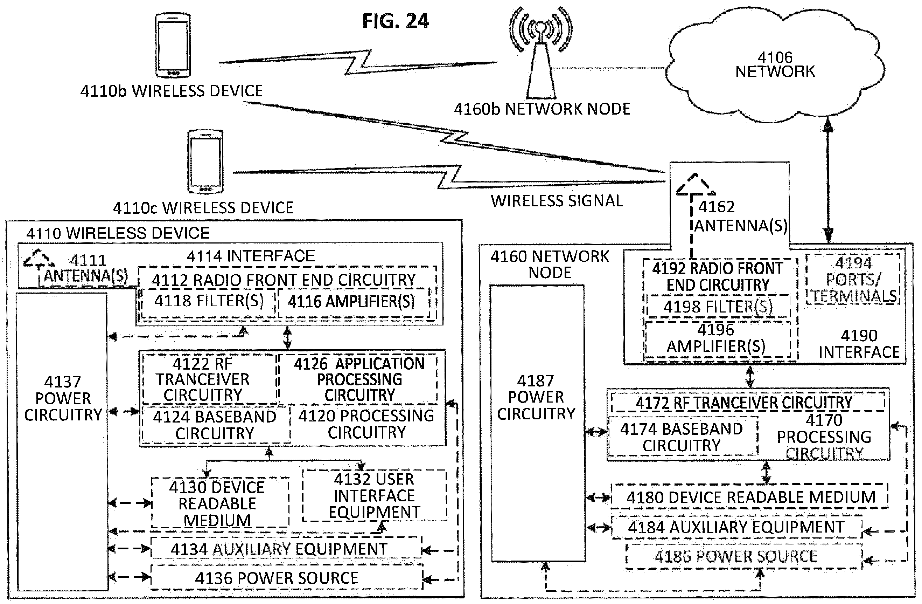

FIG. 10 is a block diagram illustrating elements of a communication device UE 1000 (also referred to as a mobile terminal, a mobile communication terminal, a wireless device, a wireless communication device, a wireless terminal, mobile device, a wireless communication terminal, user equipment, UE, a user equipment node/terminal/device, etc.) configured to provide wireless communication according to embodiments of inventive concepts. (Communication device 1000 may be provided, for example, as discussed below with respect to wireless device 4110 of FIG. 24.) As shown, communication device UE 1000 may include an antenna 1007 (e.g., corresponding to antenna 4111 of FIG. 24), and transceiver circuitry 1001 (also referred to as a transceiver, e.g., corresponding to interface 4114 of FIG. 24) including a transmitter and a receiver configured to provide uplink and downlink radio communications with a base station(s) (e.g., corresponding to network node 4160 of FIG. 24, also referred to as a RAN node) of a radio access network. Communication device UE 1000 may also include processing circuitry 1003 (also referred to as a processor, e.g., corresponding to processing circuitry 4120 of FIG. 24) coupled to the transceiver circuitry, and memory circuitry 1005 (also referred to as memory, e.g., corresponding to device readable medium 4130 of FIG. 24) coupled to the processing circuitry. The memory circuitry 1005 may include computer readable program code that when executed by the processing circuitry 1003 causes the processing circuitry to perform operations according to embodiments disclosed herein. According to other embodiments, processing circuitry 1003 may be defined to include memory so that separate memory circuitry is not required. Communication device UE 1000 may also include an interface (such as a user interface) coupled with processing circuitry 1003, and/or communication device UE may be incorporated in a vehicle.

As discussed herein, operations of communication device UE 1000 may be performed by processing circuitry 1003 and/or transceiver circuitry 1001. For example, processing circuitry 1003 may control transceiver circuitry 1001 to transmit communications through transceiver circuitry 1001 over a radio interface to a radio access network node (also referred to as a base station) and/or to receive communications through transceiver circuitry 1001 from a RAN node over a radio interface. Moreover, modules may be stored in memory circuitry 1005, and these modules may provide instructions so that when instructions of a module are executed by processing circuitry 1003, processing circuitry 1003 performs respective operations.

FIG. 11 is a block diagram illustrating elements of a radio access network RAN node 1100 (also referred to as a network node, base station, eNodeB/eNB, gNodeB/gNB, etc.) of a Radio Access Network (RAN) configured to provide cellular communication according to embodiments of inventive concepts. (RAN node 1100 may be provided, for example, as discussed below with respect to network node 4160 of FIG. 24.) As shown, the RAN node 1100 may include transceiver circuitry 1101 (also referred to as a transceiver, e.g., corresponding to portions of interface 4190 of FIG. 24) including a transmitter and a receiver configured to provide uplink and downlink radio communications with mobile terminals. The RAN node 1100 may include network interface circuitry 1107 (also referred to as a network interface, e.g., corresponding to portions of interface 4190 of FIG. 24) configured to provide communications with other nodes (e.g., with other base stations) of the RAN and/or core network CN. The RAN node 1100 may also include processing circuitry 1103 (also referred to as a processor, e.g., corresponding to processing circuitry 4170) coupled to the transceiver circuitry, and memory circuitry 1105 (also referred to as memory, e.g., corresponding to device readable medium 4180 of FIG. 24) coupled to the processing circuitry. The memory circuitry 1105 may include computer readable program code that when executed by the processing circuitry 1103 causes the processing circuitry to perform operations according to embodiments disclosed herein. According to other embodiments, processing circuitry 1103 may be defined to include memory so that a separate memory circuitry is not required.

As discussed herein, operations of the RAN node 1100 may be performed by processing circuitry 1103, network interface 1107, and/or transceiver 1101. For example, processing circuitry 1103 may control transceiver 1101 to transmit downlink communications through transceiver 1101 over a radio interface to one or more mobile terminals UEs and/or to receive uplink communications through transceiver 1101 from one or more mobile terminals UEs over a radio interface. Similarly, processing circuitry 1103 may control network interface 1107 to transmit communications through network interface 1107 to one or more other network nodes and/or to receive communications through network interface from one or more other network nodes. Moreover, modules may be stored in memory 1105, and these modules may provide instructions so that when instructions of a module are executed by processing circuitry 1103, processing circuitry 1103 performs respective operations (e.g., operations discussed below with respect to Example Embodiments relating to network nodes).

According to some other embodiments, a network node may be implemented as a core network CN node without a transceiver. In such embodiments, transmission to a wireless communication device UE may be initiated by the network node so that transmission to the wireless communication device UE is provided through a network node including a transceiver (e.g., through a base station or RAN node). According to embodiments where the network node is a RAN node including a transceiver, initiating transmission may include transmitting through the transceiver.

FIG. 12 is a block diagram illustrating elements of a core network CN node 1200 (e.g., an SMF node, an AMF node, etc.) of a communication network configured to provide cellular communication according to embodiments of inventive concepts. As shown, the CN node 1200 may include network interface circuitry 1207 (also referred to as a network interface) configured to provide communications with other nodes of the core network and/or the RAN. The CN node 1200 may also include a processing circuitry 1203 (also referred to as a processor) coupled to the network interface circuitry, and memory circuitry 1205 (also referred to as memory) coupled to the processing circuitry. The memory circuitry 1205 may include computer readable program code that when executed by the processing circuitry 1203 causes the processing circuitry to perform operations according to embodiments disclosed herein. According to other embodiments, processing circuitry 1203 may be defined to include memory so that a separate memory circuitry is not required.

As discussed herein, operations of the CN node 1200 may be performed by processing circuitry 1203 and/or network interface circuitry 1207. For example, processing circuitry 1203 may control network interface circuitry 1207 to transmit communications through network interface circuitry 1207 to one or more other network nodes and/or to receive communications through network interface circuitry from one or more other network nodes. Moreover, modules may be stored in memory 1205, and these modules may provide instructions so that when instructions of a module are executed by processing circuitry 1203, processing circuitry 1203 performs respective operations (e.g., operations discussed below with respect to Example Embodiments relating to network nodes).

Various embodiments described herein address how to create interruptions or "gaps" in the communication for a UE that is communicating in CM_CONNECTED / RRC_CONNECTED mode with a first public land mobile network ("PLMN" using credentials from a first universal subscriber identity module ("USIM"). These gaps are then subsequently used by the UE to switch to another system (e.g., a second PLMN) utilizing other credentials (e.g., a second USIM) to listen for pages.

In some embodiments, the UE to informs the NG-RAN that unavailability requests would be possible, which can prevent the network from always providing support unavailability requests. In some examples, a UE may never transmit an unavailability request because they are not a multi-SIM UE.

FIG. 2 illustrates an example of determining whether the UE 120 and the NG-RAN 110 support unavailability requests by transmitting an indication in msg5 (RRCSetupComplete). In this example, at block 210 the UE 120 may be in an RRC_IDLE state. At block 220, the UE 120 transmits a PRACH preamble to the NG-RAN 110. At block 230, the NG-RAN 120 responds with a random access response. At block 240, UE 120 transmits a RRC Setup Request message. At block 250, the NG-RAN 110 transmits a RRC Setup message. In additional or alternative examples, the RRC Setup message may include whether the NG-RAN 110 supports unavailability requests. At block 260, the UE 120 becomes RRC_CONNECTED with the NG-RAN 110. At block 270, the UE 120 transmits a RRC Setup Complete message to the NG-RAN 110 that includes "UnavailabilityInfo" indicating whether the UE 110 supports unavailability requests and/or requesting indication of whether the NG-RAN 110 supports unavailability requests.

In some embodiments, when the UE connects to one of the PLMNs the legacy connection setup procedure is executed. The msg5 (RRCSetupComplete) will include an additional information element with a request to be configured with the possibility to send unavailability requests, or an indication that the UE may send unavailability requests while in RRC_CONNECTED. In additional or alternative embodiments, the UE may send in the message a pre-determined/default value for the unavailability duration.

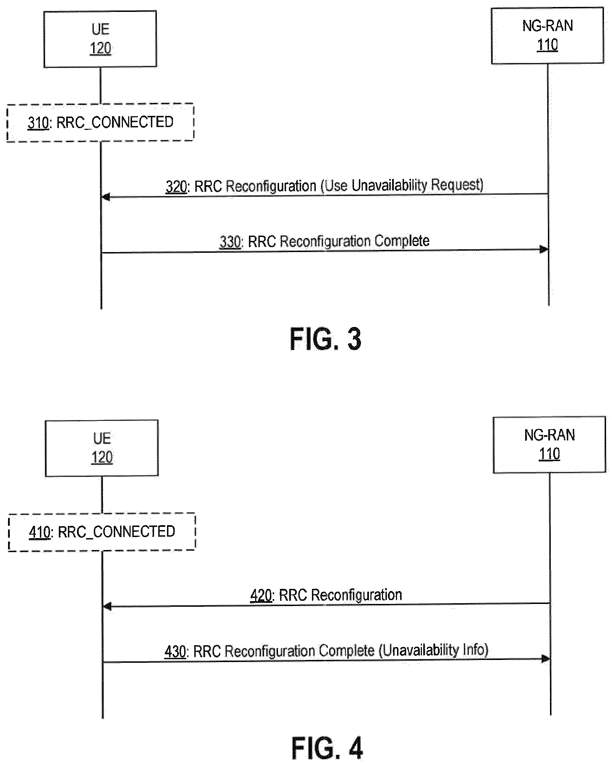

FIG. 3 illustrates an example in which the NG-RAN 110 decides if the UE 120 will use the unavailability requests (e.g. depending if NG-RAN supports the feature), by properly configuring it at a following RRC reconfiguration. In this example, at block 310 the UE 120 is RRC_CONNECTED with the NG-RAN 110. At block 320, NG-RAN 110 transmits a RRC Reconfiguration message indicating whether unavailability requests will be supported. At block 330, the UE 120 transmits a RRC Reconfiguration Complete message.

In additional or alternative examples the NG-RAN may be just aware that the UE might send unavailability requests and can be prepared to configure the scheduling accordingly.

FIG. 4 illustrates an example in which the UE 120 indicates in a RRC Reconfiguration Complete message, whether unavailability requests should be supported by the NG-RAN 110. Using the msg5, the UE can inform the NG-RAN about the possibility to send unavailability requests, at the reconfiguration procedure. An advantage here is that at the reconfiguration, the UE knows if it necessary to request unavailability (e.g. there might be cases when the UE is able to monitor the two PLMNs simultaneously, but the reconfiguration can remove such possibility, so the UE has to request unavailability). In this example, at block 310 the UE 120 is RRC_CONNECTED with the NG-RAN 110. At block 320, NG-RAN 110 transmits a RRC Reconfiguration message. At block 330, the UE 120 transmits a RRC Reconfiguration Complete message indicating whether unavailability requests will be supported. In some embodiments, the information is sent in a new information element in the RRC Reconfiguration Complete message. Additionally, the UE sends in the message a pre-determined/default value for the unavailability duration.

In some embodiments, the unavailability state is used by the UE in connected state in one PLMN to monitor the paging in the other PLMN. In this scenario the unavailability requests may be sent in a quick and efficient manner. Various embodiments described herein use the MAC protocol layer to send such requests.

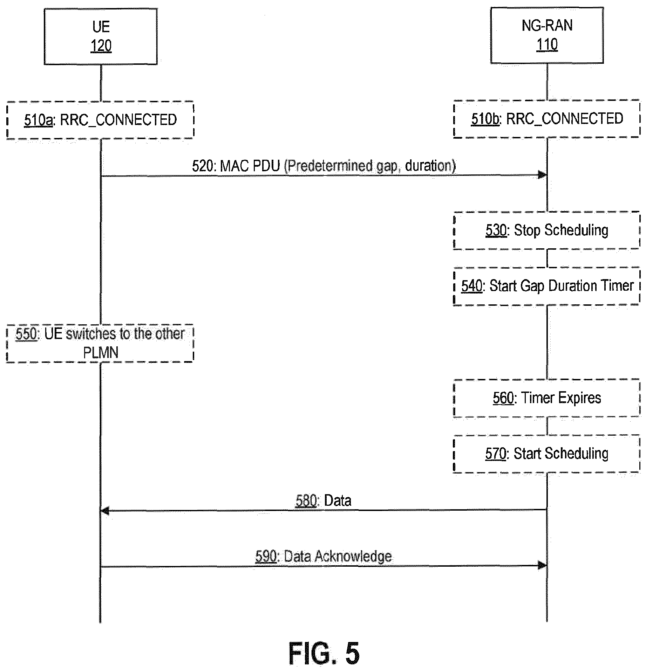

FIGS. 5-6 illustrate examples of transmitting an unavailability request with a predetermined unavailability duration (or gap).

In FIG. 5, at operation 510a-b the UE 120 and NG-RAN 110 are RRC_CONNECTED. At operation 520, the UE transmits he unavailability request in the MAC PDU. The UE specifies the duration of the gap in the MAC Control Element (CE). At operation 530, when the NG-RAN receives the indication, it stops scheduling the UE and, at operation 540, starts a timer, set as the time indicated by the UE (or the NG-RAN can override it if needed). At operation 550, the may transition to an unavailable state by switching to another PLMN and/or using another USIM while remaining RRC_CONNECTED to the NG-RAN 110.

At operation 560, after the unavailability time indicated in the MAC CE, the network assumes that the UE is back. At operation 570, the NG-RAN 110 starts scheduling transmissions to the UE again. At operation 580 data is transmitted to the UE 120 and at operation 590 a data acknowledgment is transmitted back by the UE.

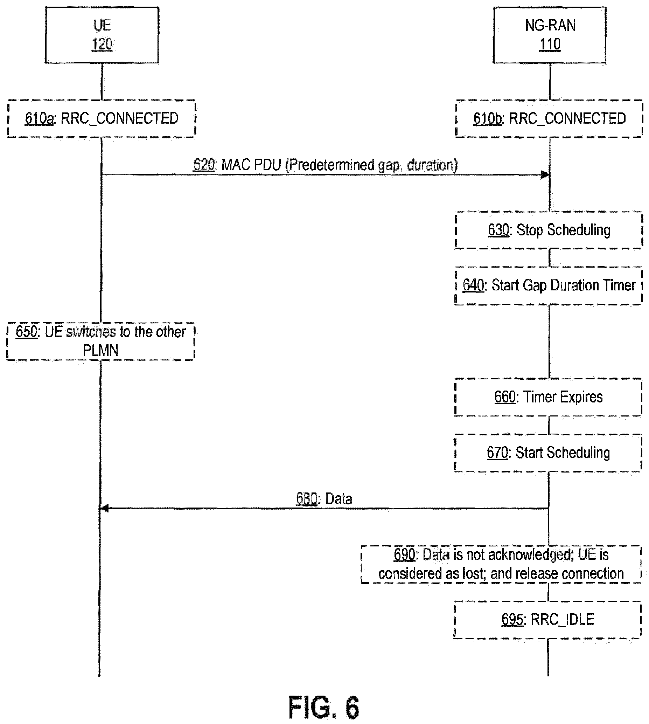

FIG. 6 illustrates a similar example in which the UE fails to transmit a data acknowledgement. At operation 620, the UE transmits he unavailability request in the MAC PDU. The UE specifies the duration of the gap in the MAC Control Element (CE). At operation 630, when the NG-RAN receives the indication, it stops scheduling the UE and, at operation 640, starts a timer, set as the time indicated by the UE (or the NG-RAN can override it if needed). At operation 650, the may transition to an unavailable state by switching to another PLMN and/or using another USIM while remaining RRC_CONNECTED to the NG-RAN 110.

At operation 660, after the unavailability time indicated in the MAC CE, the network assumes that the UE is back. At operation 670, the NG-RAN 110 starts scheduling transmissions to the UE again. At operation 680 data is transmitted to the UE 120. At operation 690 a data acknowledgment is not received with a predetermined time and the network assumes that UE has never returned and then it releases the connection (RRC_IDLE), possibly without sending a release message over RRC such that in operation 695 the NG-RAN 110 considers the UE to be idle.

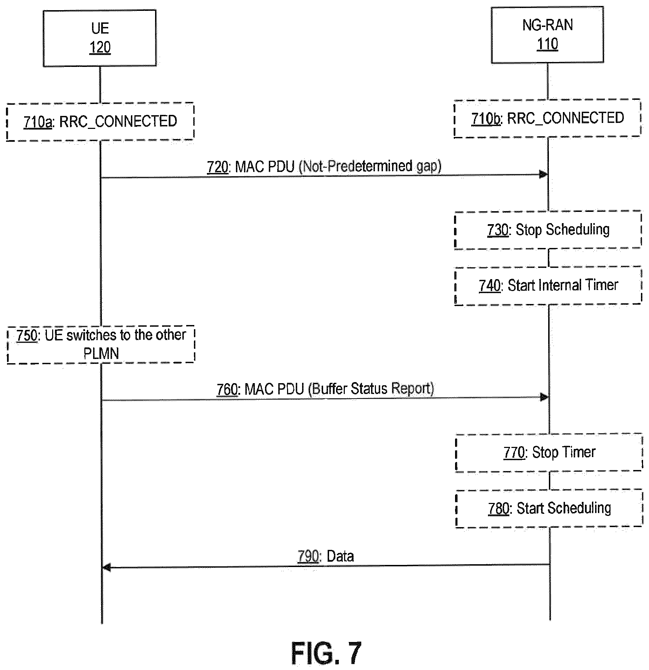

FIGS. 7-8 illustrate examples of transmitting an unavailability request without a predetermined unavailability duration (or gap).

In FIG. 7, at operation 710a-b the UE 120 and the NG-RAN 110 are RRC_CONNECTED. At operation 720, the UE 120 sends the unavailability request in the MAC PDU. The UE 120 only specifies that it is being unavailable until a return signal is transmitted by the UE 120 to the network. At operation 730, when the NG-RAN 110 receives the indication, it stops scheduling, but the UE 120 state remains in RRC_CONNECTED.

In this embodiment, the unavailability gap duration is not pre-determined, but rather, the duration is stopped by a second signal by the UE 120. At operation 740 the NG-RAN 110 may initiate an internal timer and at operation 750 the UE 120 may enter the unavailability state.

At operation 760, the UE 120 indicates that it has returned ("unavailability stop signal") through transmission of the MAC PDU Buffer Status Report (BSR) indicating no data. This is seen by the network as an indication that unavailability is no longer valid and the UE 120 is back. At operation 770, the NG-RAN 110 stops the internal timer and at operation 780, the NG-RAN starts scheduling the UE 120 again. At operation 790, NG-RAN 110 transmits data to the UE 120.

In this example, in order to cover possible error cases, the network starts an internal timer (preconfigured, or set by operator) when the unavailability request is received. The timer is stopped when the network receives the signal that the UE is back.

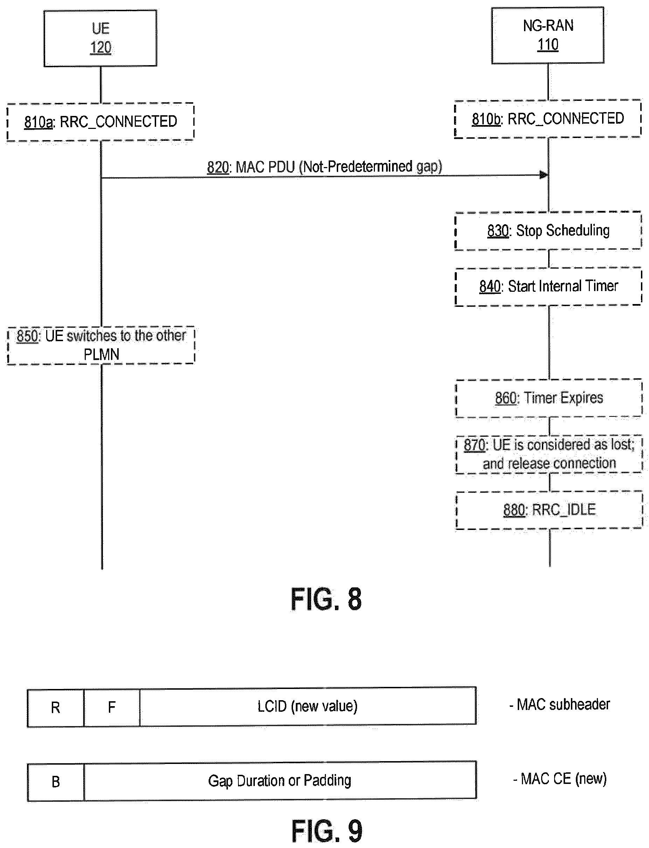

FIG. 8 illustrates an example in which the timer expires and the network considers the UE lost and releases the connection (transition the UE to RRC_IDLE). At operation 810a-b the UE 120 and the NG-RAN 110 are RRC_CONNECTED. At operation 820, the UE 120 sends the unavailability request in the MAC PDU. The UE 120 only specifies that it is being unavailable until a return signal is transmitted by the UE 120 to the network. At operation 830, when the NG-RAN 110 receives the indication, it stops scheduling, but the UE 120 state remains in RRC_CONNECTED.

In this embodiment, the unavailability gap duration is not pre-determined, but rather, the duration is stopped by a second signal by the UE 120. At operation 840 the NG-RAN 110 may initiate an internal timer and at operation 850 the UE 120 may enter the unavailability state.

At operation 860, the timer expires. At operation 870, the NG-RAN 110 determines that the UE is lost and releases the connection such that at operation 880, the UE is considered idle.

In FIGS. 5-8, the UE will return to RRC_CONNECTED. The scheduling will continue, potentially with missed data: this is dependent on the QoS requirements and the PDU flows associated to the data.

The period of time when the UE is unavailable may not be considered from a QoS perspective. Treatment of transmit buffers on the network side can be done in a proper way.

FIG. 9 illustrates an example of a MAC PDU for unavailability requests. A new LCID value is used in the MAC subheader to identify the unavailability requests. A new MAC CE is defined, which includes one bit (B) to specify if the unavailability gap is predetermined or non-predetermined.

In some embodiments that include an unavailability request with a predetermined gap, the MAC CE includes the duration of the gap: it can an indication to use the default value earlier indicated in msg5/RRCReconfigurationComplete, or there can be a set of predetermined values that is preconfigured in UE and NG-RAN node and different values of the indication implies different periods of time.

In alternative embodiments that include a non-predetermined gap, the field contains padding.

In some embodiments, the unavailability gaps can be used for UEs with multiple SIMS to switch between using different SIMS to communicate. In additional or alternative embodiments, the unavailability requests can be used to obtain gaps for other purposes, for example, for power saving related aspects. In this case the UE may use similar unavailability requests to be able to switch, during the short gap periods, into power saving modes.

In some embodiments, the UE can notify the NG-RAN as to why the UE wants to transition to an unavailability state or provide a generic request.

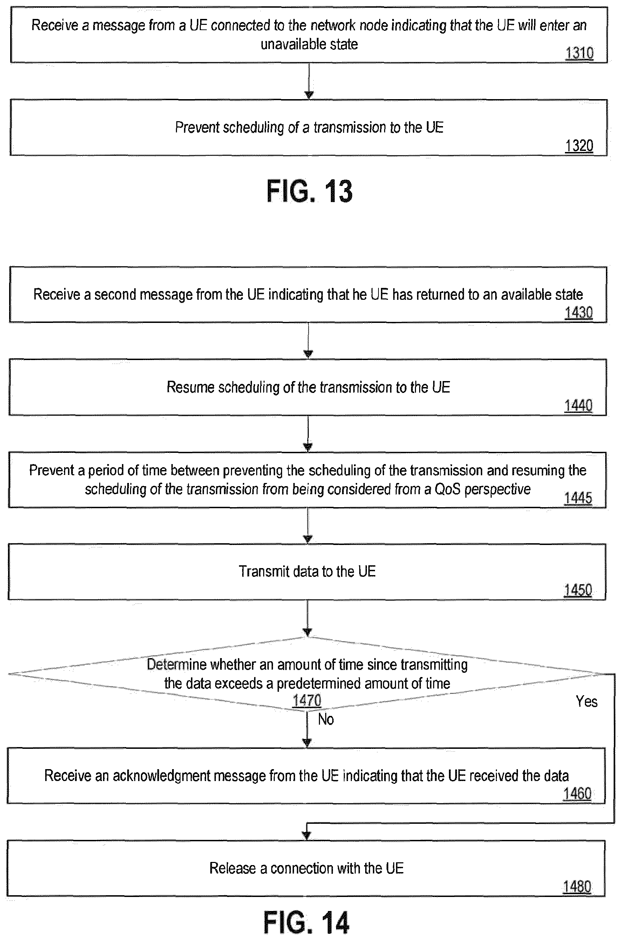

Operations of a network node will now be discussed with reference to the flow charts of FIGS. 13-18 according to some embodiments of inventive concepts. FIGS. 13-18 will be described below as being performed by RAN node 1100 (implemented using the structure of the block diagram of FIG. 11). For example, modules may be stored in memory 1105 of FIG. 11, and these modules may provide instructions so that when the instructions of a module are executed by respective RAN processing circuitry 1103, processing circuitry 1103 performs respective operations of the flow charts.

FIG. 13 illustrates an example of a process performed by a network node to negotiate a transmission gap (or an unavailability state) for a connected communication device.

At block 1310, processing circuitry 1103 receives, via transceiver 1101, a message from a communication device connected to the network node indicating that the communication device will enter an unavailable state. In some embodiments, the communication device is radio resource control ("RRC") connected to the network node. In additional or alternative embodiments, receiving the message includes receiving a media access control ("MAC") protocol data unit ("PDU") (e.g., as illustrated in FIG. 9) including a first bit indicating whether the unavailable state is for a predetermined duration. In additional or alternative embodiments, the MAC PDU further includes a set of bits indicating a value of the predetermined duration.

At block 1320, processing circuitry 1103, responsive to receiving the message, prevents scheduling of a transmission to the communication device. In some embodiments, preventing the scheduling of a transmission to the communication device includes generating a buffer of data associated with the communication device. In additional or alternative embodiments, preventing the scheduling of a transmission to the communication device can allow resources previously allocated to the communication device to be allocated for other communication devices connected to the network node.

FIGS. 14-15 illustrate examples of a process performed by a network node for handling an unavailability request having a predetermined duration.

In FIG. 14 the network node receives a message from the UE prior to a timer expiring. At block 1430, processing circuitry 1103 receives, via transceiver 1101, a second message from the communication device indicating that the communication device has returned to an available state.

At block 1440, processing circuitry 1103, responsive to receiving the second message, resumes scheduling of the transmission to the communication device. At block 1450, processing circuitry 1103 transmits, via transceiver 1101, data to the communication device. At block 1470, processing circuitry 1103 determines whether an amount of time since transmitting the data exceeds a predetermined amount of time. At block 1460, processing circuitry 1103 receives, prior to the predetermined amount of time elapsing and via transceiver 1101, an acknowledgment message from the communication device indicating that the communication device received the data. At block 1480, processing circuitry 1103, responsive to determining that the amount of time since transmitting the data exceeds a predetermined amount of time, releases a connection with the communication device.

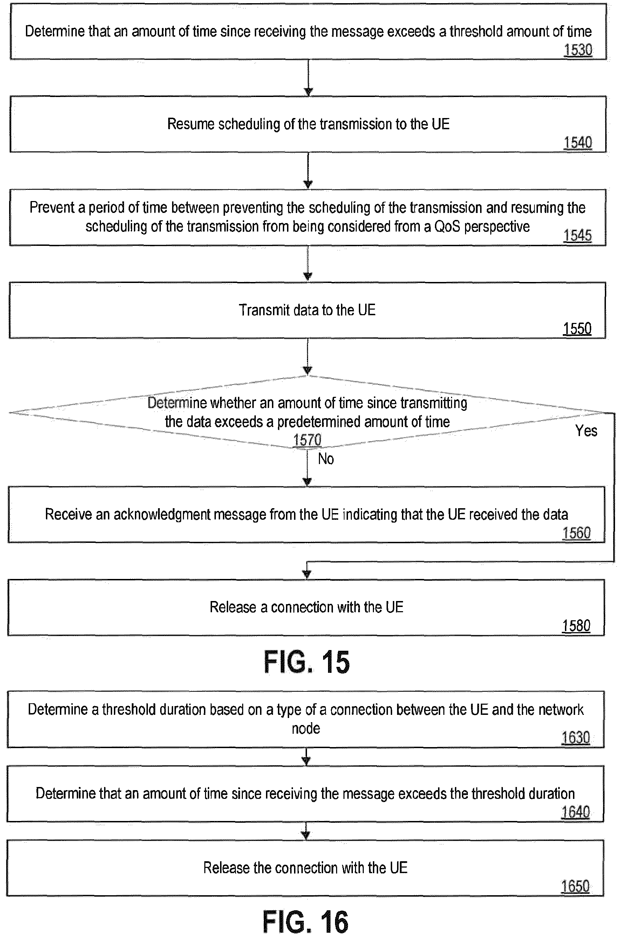

Alternatively, in FIG. 15 the network node does not receive a message from the UE prior to a timer expiring. At block 1530, processing circuitry 1103 determines that an amount of time since receiving the message exceeds a threshold amount of time.

At block 1540, processing circuitry 1103 resumes scheduling of the transmission to the communication device. At block 1550, processing circuitry 1103 transmits, via transceiver 1101, data to the communication device. At block 1570, processing circuitry 1103 determines whether an amount of time since transmitting the data exceeds a predetermined amount of time. At block 1560, processing circuitry 1103 receives, prior to the predetermined amount of time elapsing and via transceiver 1101, an acknowledgment message from the communication device indicating that the communication device received the data. At block 1580, processing circuitry 1103, responsive to determining that the amount of time since transmitting the data exceeds a predetermined amount of time, releases a connection with the communication device.

FIG. 16 illustrates an example of a process performed by a network node for handling an unavailability request with a non-predetermined duration.

At block 1630, processing circuitry 1103 determines a threshold duration based on a type of a connection between the communication device and the network node. For example, a larger threshold duration may be set when the connection between the communication device is associated with a voice connection than a data connection.

At block 1640, processing circuitry 1103 determines that an amount of time since receiving the message exceeds the threshold duration. At block 1650, processing circuitry 1103 releases the connection with the communication device.

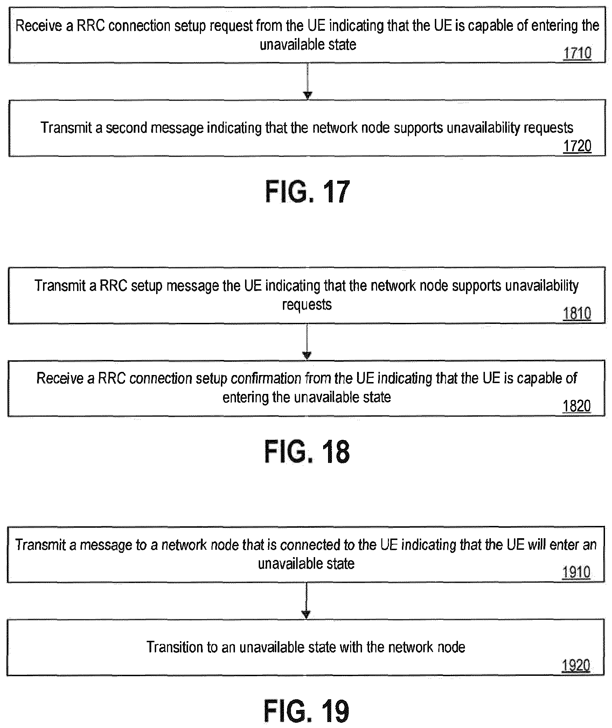

FIGS. 17-18 illustrate examples of processes performed by a network node for determining that both the communication device and the network node are capable of handling unavailability requests.

In FIG. 17, at block 1710, processing circuitry 1103 receives, via transceiver 1101, a RRC connection setup request from the communication device indicating that the communication device is capable of entering the unavailable state. At block 1720, processing circuitry 1103, responsive to receiving the RRC Connection setup request, transmits, via transceiver 1101, a second message indicating that the network node supports unavailability requests.

In FIG. 18, at block 1810, processing circuitry 1103 transmits, via transceiver 1101, a RRC setup message to the communication device indicating that the network node supports unavailability requests. At block 1820, processing circuitry 1103, responsive to transmitting the RRC setup message, receives, via transceiver 1101, a RRC connection setup confirmation from the communication device indicating that the communication device is capable of entering the unavailable state.

In some embodiments, indicating that the communication device is capable of entering the unavailable state includes an indication that the communication devices supports multiple subscriber identity modules ("SIMs"). In additional or alternative embodiments, the communication device uses a first SIM in communicating with the network node and a second SIM in communicating with a second network node in a second communication network. In additional or alternative embodiments, the network node is a RAN node and the communication network is a new radio ("NR") network.

Various operations of FIGS. 13-18 may be optional with respect to some embodiments of network nodes and related methods. Regarding method of example embodiment 1 (set forth below), for example, operations of blocks 1430, 1440, 1450, 1460, 1470, and 1480 of FIG. 14; blocks 1530, 1540, 1550, 1560, 1570, and 1580 of FIG. 15; blocks 1630, 1640, and 1650 of FIG. 16; blocks 1710 and 1720 of FIG. 17; and blocks 1810 and 1820 of FIG. 18 may be optional.

Operations of a communication device will now be discussed with reference to the flow charts of FIGS. 19-23 according to some embodiments of inventive concepts. FIGS. 19-23 will be described below as being performed by communication device 1000 (implemented using the structure of the block diagram of FIG. 10). For example, modules may be stored in memory 1005 of FIG. 10, and these modules may provide instructions so that when the instructions of a module are executed by respective communication device processing circuitry 1003, processing circuitry 1003 performs respective operations of the flow charts.

FIG. 19 illustrates an example of a process performed by a communication device to negotiate a transmission gap (or an unavailability state) with a connected network node.

At block 1910, processing circuitry 1003 transmits, via transceiver 1001, a message to a network node that is connected to the communication device indicating that the communication device will enter an unavailable state. In some embodiments, the communication device is radio resource control ("RRC") connected to the network node. In additional or alternative embodiments, transmitting the message includes transmitting a media access control ("MAC") protocol data unit ("PDU") (e.g., as illustrated in FIG. 9) including a first bit indicating whether the unavailable state is for a predetermined duration. In additional or alternative embodiments, the MAC PDU further includes a set of bits indicating a value of the predetermined duration.

At block 1920, processing circuitry 1003 transitions to an unavailable state with the network node. In some embodiments, the unavailable state is a low power state. In additional or alternative embodiments, the communication device is associated with multiple SIMs and transitioning to an unavailable state comprises switching the SIM being used to communicate. For example, the communication device may be connected to the network node using a first SIM then, in response to transmitting the first message, switch to communicating with the network node or another network node using a second SIM.

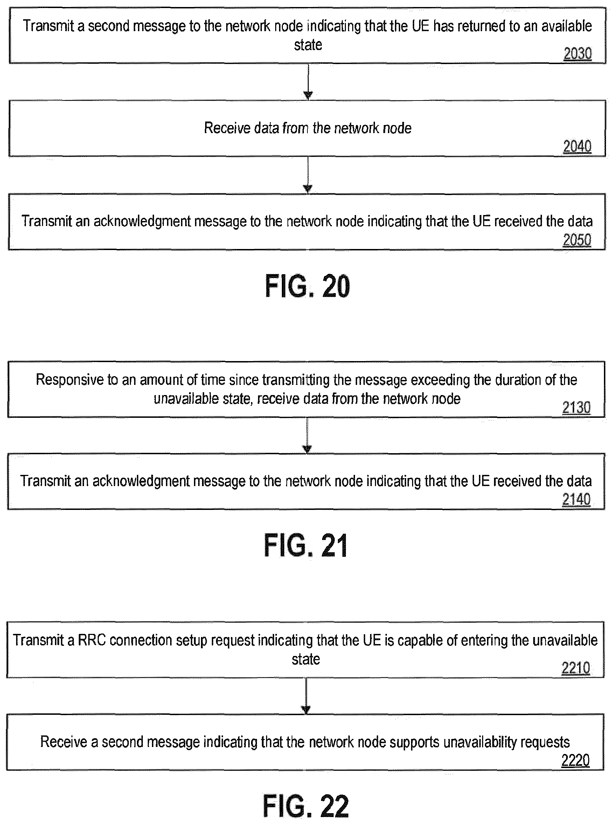

FIGS. 20-21 illustrate examples of processes performed by the communication device to return to an available state with the network node.

In FIG. 20, at block 2030, processing circuitry 1003 transmits, via transceiver 1001, a second message to the network node indicating that the communication device has returned to an available state. At block 2040, processing circuitry 1003 receives, via transceiver 1001, data from the network node. At block 2050, processing circuitry 1003 transmits, via transceiver 1001, an acknowledgment message to the network node indicating that the communication device received the data.

In FIG. 21, at block 2130, processing circuitry 1003, responsive to an amount of time since transmitting the message exceeding a duration of the unavailable state, receives, via transceiver 1001, data from the network node. At block 2140, processing circuitry 1003 transmits, via transceiver 1001, an acknowledgment message to the network node indicating that the communication device received the data.

FIGS. 22-23 illustrate examples of processes performed by a communication device for determining that both the communication device and the network node are capable of handling unavailability requests.

In FIG. 22, at block 2210, processing circuitry 1003 transmits, via transceiver 1001, a RRC connection setup request indicating that the communication device is capable of entering the unavailable state. At block 2220, processing circuitry 1003 receives, via transceiver 1001, a second message indicating that the network node supports unavailability requests.

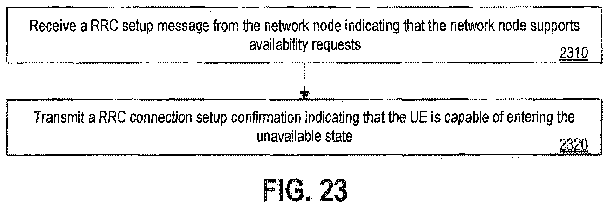

In FIG. 23, at block 2310, processing circuitry 1003 receives, via transceiver 1001, a RRC setup message from the network node indicating that the network node supports unavailability requests. At block 2320, processing circuitry 1003 transmits, via transceiver 1001, a RRC connection setup confirmation indicating that the communication device is capable of entering the unavailable state.

Various operations of FIGS. 19-23 may be optional with respect to some embodiments of network nodes and related methods. Regarding method of example embodiment 33 (set forth below), for example, operations of blocks 2030, 2040, and 2050 of FIG. 20; blocks 2110 and 2120 of FIG. 21; blocks 2210 and 2220 of FIG. 22; and blocks 2310 and 2320 of FIG. 23 may be optional.

Explanations for abbreviations from the above disclosure are provided below.

| Abbreviation | Explanation |
| --- | --- |
| 5G-GUTI | 5G Global Unique Temporary Identifier |
| 5G-S-TMSI | 5G Shortened Temporary Mobile Subscriber Identity |
| 5GC | Fifth Generation Core network |

(continued)

| Abbreviation | Explanation |
| --- | --- |
| AMF | Access and Mobility management Function |
| CE | Control Element |
| EPC | Evolved Packet Core |
| IMSI | International Mobile Subscriber Identity |
| LCID | Logical Channel ID |
| PF | Paging Frame |
| PLMN | Public Land Mobile Network |
| PO | Paging Occasion |
| RX | Receiver |
| SIM | GSM Subscriber Identity Module |
| SNF | System Frame Number |
| TX | Transmitter |
| UE | User Equipment |
| USIM | Universal Subscriber Identity Module |

Some references include

"3rd Generation Partnership Project; Technical Specification Group Radio Access Network; Evolved Universal Terrestrial Radio Access (E-UTRA); User Equipment (UE) procedures in idle mode" (Release 16); TS 36.304;
"3rd Generation Partnership Project; Technical Specification Group Radio Access Network; NR; User Equipment (UE) procedures in Idle mode and RRC Inactive state" (Release 16); TS 38.304
"3rd Generation Partnership Project; Technical Specification Group Radio Access Network; NR; Radio Resource Control (RRC) protocol specification" (Release 16); TS 38.331
"3rd Generation Partnership Project; Technical Specification Group Radio Access Network; NR; Medium Access Control (MAC) protocol specification" (Release 16); TS.38.321

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

FIG. 24 illustrates a wireless network in accordance with some embodiments.

Although the subject matter described herein may be implemented in any appropriate type of system using any suitable components, the embodiments disclosed herein are described in relation to a wireless network, such as the example wireless network illustrated in FIG. 24. For simplicity, the wireless network of FIG. 24 only depicts network 4106, network nodes 4160 and 4160b, and WDs 4110, 4110b, and 4110c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node 4160 and wireless device (WD) 4110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 4106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 4160 and WD 4110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIG. 24, network node 4160 includes processing circuitry 4170, device readable medium 4180, interface 4190, auxiliary equipment 4184, power source 4186, power circuitry 4187, and antenna 4162. Although network node 4160 illustrated in the example wireless network of FIG. 24 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 4160 are depicted as single boxes located within a larger box, or nested within multiple boxes, in practice, a network node may comprise multiple different physical components that make up a single illustrated component (e.g., device readable medium 4180 may comprise multiple separate hard drives as well as multiple RAM modules).

Similarly, network node 4160 may be composed of multiple physically separate components (e.g., a NodeB component and a RNC component, or a BTS component and a BSC component, etc.), which may each have their own respective components. In certain scenarios in which network node 4160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 4160 may be configured to support multiple radio access technologies (RATs). In such embodiments, some components may be duplicated (e.g., separate device readable medium 4180 for the different RATs) and some components may be reused (e.g., the same antenna 4162 may be shared by the RATs). Network node 4160 may also include multiple sets of the various illustrated components for different wireless technologies integrated into network node 4160, such as, for example, GSM, WCDMA, LTE, NR, WiFi, or Bluetooth wireless technologies. These wireless technologies may be integrated into the same or different chip or set of chips and other components within network node 4160.

Processing circuitry 4170 is configured to perform any determining, calculating, or similar operations (e.g., certain obtaining operations) described herein as being provided by a network node. These operations performed by processing circuitry 4170 may include processing information obtained by processing circuitry 4170 by, for example, converting the obtained information into other information, comparing the obtained information or converted information to information stored in the network node, and/or performing one or more operations based on the obtained information or converted information, and as a result of said processing making a determination.

Processing circuitry 4170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 4160 components, such as device readable medium 4180, network node 4160 functionality. For example, processing circuitry 4170 may execute instructions stored in device readable medium 4180 or in memory within processing circuitry 4170. Such functionality may include providing any of the various wireless features, functions, or benefits discussed herein. In some embodiments, processing circuitry 4170 may include a system on a chip (SOC).

In some embodiments, processing circuitry 4170 may include one or more of radio frequency (RF) transceiver circuitry 4172 and baseband processing circuitry 4174. In some embodiments, radio frequency (RF) transceiver circuitry 4172 and baseband processing circuitry 4174 may be on separate chips (or sets of chips), boards, or units, such as radio units and digital units. In alternative embodiments, part or all of RF transceiver circuitry 4172 and baseband processing circuitry 4174 may be on the same chip or set of chips, boards, or units

In certain embodiments, some or all of the functionality described herein as being provided by a network node, base station, eNB or other such network device may be performed by processing circuitry 4170 executing instructions stored on device readable medium 4180 or memory within processing circuitry 4170. In alternative embodiments, some or all of the functionality may be provided by processing circuitry 4170 without executing instructions stored on a separate or discrete device readable medium, such as in a hard-wired manner. In any of those embodiments, whether executing instructions stored on a device readable storage medium or not, processing circuitry 4170 can be configured to perform the described functionality. The benefits provided by such functionality are not limited to processing circuitry 4170 alone or to other components of network node 4160, but are enjoyed by network node 4160 as a whole, and/or by end users and the wireless network generally.

Device readable medium 4180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 4170. Device readable medium 4180 may store any suitable instructions, data or information, including a computer program, software, an application including one or more of logic, rules, code, tables, etc. and/or other instructions capable of being executed by processing circuitry 4170 and, utilized by network node 4160. Device readable medium 4180 may be used to store any calculations made by processing circuitry 4170 and/or any data received via interface 4190. In some embodiments, processing circuitry 4170 and device readable medium 4180 may be considered to be integrated.

Interface 4190 is used in the wired or wireless communication of signalling and/or data between network node 4160, network 4106, and/or WDs 4110. As illustrated, interface 4190 comprises port(s)/terminal(s) 4194 to send and receive data, for example to and from network 4106 over a wired connection. Interface 4190 also includes radio front end circuitry 4192 that may be coupled to, or in certain embodiments a part of, antenna 4162. Radio front end circuitry 4192 comprises filters 4198 and amplifiers 4196. Radio front end circuitry 4192 may be connected to antenna 4162 and processing circuitry 4170. Radio front end circuitry may be configured to condition signals communicated between antenna 4162 and processing circuitry 4170. Radio front end circuitry 4192 may receive digital data that is to be sent out to other network nodes or WDs via a wireless connection. Radio front end circuitry 4192 may convert the digital data into a radio signal having the appropriate channel and bandwidth parameters using a combination of filters 4198 and/or amplifiers 4196. The radio signal may then be transmitted via antenna 4162. Similarly, when receiving data, antenna 4162 may collect radio signals which are then converted into digital data by radio front end circuitry 4192. The digital data may be passed to processing circuitry 4170. In other embodiments, the interface may comprise different components and/or different combinations of components.

In certain alternative embodiments, network node 4160 may not include separate radio front end circuitry 4192, instead, processing circuitry 4170 may comprise radio front end circuitry and may be connected to antenna 4162 without separate radio front end circuitry 4192. Similarly, in some embodiments, all or some of RF transceiver circuitry 4172 may be considered a part of interface 4190. In still other embodiments, interface 4190 may include one or more ports or terminals 4194, radio front end circuitry 4192, and RF transceiver circuitry 4172, as part of a radio unit (not shown), and interface 4190 may communicate with baseband processing circuitry 4174, which is part of a digital unit (not shown).

Antenna 4162 may include one or more antennas, or antenna arrays, configured to send and/or receive wireless signals. Antenna 4162 may be coupled to radio front end circuitry 4192 and may be any type of antenna capable of transmitting and receiving data and/or signals wirelessly. In some embodiments, antenna 4162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 4162 may be separate from network node 4160 and may be connectable to network node 4160 through an interface or port.

Antenna 4162, interface 4190, and/or processing circuitry 4170 may be configured to perform any receiving operations and/or certain obtaining operations described herein as being performed by a network node. Any information, data and/or signals may be received from a wireless device, another network node and/or any other network equipment. Similarly, antenna 4162, interface 4190, and/or processing circuitry 4170 may be configured to perform any transmitting operations described herein as being performed by a network node. Any information, data and/or signals may be transmitted to a wireless device, another network node and/or any other network equipment.

Power circuitry 4187 may comprise, or be coupled to, power management circuitry and is configured to supply the components of network node 4160 with power for performing the functionality described herein. Power circuitry 4187 may receive power from power source 4186. Power source 4186 and/or power circuitry 4187 may be configured to provide power to the various components of network node 4160 in a form suitable for the respective components (e.g., at a voltage and current level needed for each respective component). Power source 4186 may either be included in, or external to, power circuitry 4187 and/or network node 4160. For example, network node 4160 may be connectable to an external power source (e.g., an electricity outlet) via an input circuitry or interface such as an electrical cable, whereby the external power source supplies power to power circuitry 4187. As a further example, power source 4186 may comprise a source of power in the form of a battery or battery pack which is connected to, or integrated in, power circuitry 4187. The battery may provide backup power should the external power source fail. Other types of power sources, such as photovoltaic devices, may also be used.

Alternative embodiments of network node 4160 may include additional components beyond those shown in FIG. 24 that may be responsible for providing certain aspects of the network node's functionality, including any of the functionality described herein and/or any functionality necessary to support the subject matter described herein. For example, network node 4160 may include user interface equipment to allow input of information into network node 4160 and to allow output of information from network node 4160. This may allow a user to perform diagnostic, maintenance, repair, and other administrative functions for network node 4160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 4110 includes antenna 4111, interface 4114, processing circuitry 4120, device readable medium 4130, user interface equipment 4132, auxiliary equipment 4134, power source 4136 and power circuitry 4137. WD 4110 may include multiple sets of one or more of the illustrated components for different wireless technologies supported by WD 4110, such as, for example, GSM, WCDMA, LTE, NR, WiFi, WiMAX, or Bluetooth wireless technologies, just to mention a few. These wireless technologies may be integrated into the same or different chips or set of chips as other components within WD 4110.

Antenna 4111 may include one or more antennas or antenna arrays, configured to send and/or receive wireless signals, and is connected to interface 4114. In certain alternative embodiments, antenna 4111 may be separate from WD 4110 and be connectable to WD 4110 through an interface or port. Antenna 4111, interface 4114, and/or processing circuitry 4120 may be configured to perform any receiving or transmitting operations described herein as being performed by a WD. Any information, data and/or signals may be received from a network node and/or another WD. In some embodiments, radio front end circuitry and/or antenna 4111 may be considered an interface.

As illustrated, interface 4114 comprises radio front end circuitry 4112 and antenna 4111. Radio front end circuitry 4112 comprise one or more filters 4118 and amplifiers 4116. Radio front end circuitry 4112 is connected to antenna 4111 and processing circuitry 4120, and is configured to condition signals communicated between antenna 4111 and processing circuitry 4120. Radio front end circuitry 4112 may be coupled to or a part of antenna 4111. In some embodiments, WD 4110 may not include separate radio front end circuitry 4112; rather, processing circuitry 4120 may comprise radio front end circuitry and may be connected to antenna 4111. Similarly, in some embodiments, some or all of RF transceiver circuitry 4122 may be considered a part of interface 4114. Radio front end circuitry 4112 may receive digital data that is to be sent out to other network nodes or WDs via a wireless connection. Radio front end circuitry 4112 may convert the digital data into a radio signal having the appropriate channel and bandwidth parameters using a combination of filters 4118 and/or amplifiers 4116. The radio signal may then be transmitted via antenna 4111. Similarly, when receiving data, antenna 4111 may collect radio signals which are then converted into digital data by radio front end circuitry 4112. The digital data may be passed to processing circuitry 4120. In other embodiments, the interface may comprise different components and/or different combinations of components.

Processing circuitry 4120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 4110 components, such as device readable medium 4130, WD 4110 functionality. Such functionality may include providing any of the various wireless features or benefits discussed herein. For example, processing circuitry 4120 may execute instructions stored in device readable medium 4130 or in memory within processing circuitry 4120 to provide the functionality disclosed herein.

As illustrated, processing circuitry 4120 includes one or more of RF transceiver circuitry 4122, baseband processing circuitry 4124, and application processing circuitry 4126. In other embodiments, the processing circuitry may comprise different components and/or different combinations of components. In certain embodiments processing circuitry 4120 of WD 4110 may comprise a SOC. In some embodiments, RF transceiver circuitry 4122, baseband processing circuitry 4124, and application processing circuitry 4126 may be on separate chips or sets of chips. In alternative embodiments, part or all of baseband processing circuitry 4124 and application processing circuitry 4126 may be combined into one chip or set of chips, and RF transceiver circuitry 4122 may be on a separate chip or set of chips. In still alternative embodiments, part or all of RF transceiver circuitry 4122 and baseband processing circuitry 4124 may be on the same chip or set of chips, and application processing circuitry 4126 may be on a separate chip or set of chips. In yet other alternative embodiments, part or all of RF transceiver circuitry 4122, baseband processing circuitry 4124, and application processing circuitry 4126 may be combined in the same chip or set of chips. In some embodiments, RF transceiver circuitry 4122 may be a part of interface 4114. RF transceiver circuitry 4122 may condition RF signals for processing circuitry 4120.

In certain embodiments, some or all of the functionality described herein as being performed by a WD may be provided by processing circuitry 4120 executing instructions stored on device readable medium 4130, which in certain embodiments may be a computer-readable storage medium. In alternative embodiments, some or all of the functionality may be provided by processing circuitry 4120 without executing instructions stored on a separate or discrete device readable storage medium, such as in a hard-wired manner. In any of those particular embodiments, whether executing instructions stored on a device readable storage medium or not, processing circuitry 4120 can be configured to perform the described functionality. The benefits provided by such functionality are not limited to processing circuitry 4120 alone or to other components of WD 4110, but are enjoyed by WD 4110 as a whole, and/or by end users and the wireless network generally.

Processing circuitry 4120 may be configured to perform any determining, calculating, or similar operations (e.g., certain obtaining operations) described herein as being performed by a WD. These operations, as performed by processing circuitry 4120, may include processing information obtained by processing circuitry 4120 by, for example, converting the obtained information into other information, comparing the obtained information or converted information to information stored by WD 4110, and/or performing one or more operations based on the obtained information or converted information, and as a result of said processing making a determination.

Device readable medium 4130 may be operable to store a computer program, software, an application including one or more of logic, rules, code, tables, etc. and/or other instructions capable of being executed by processing circuitry 4120. Device readable medium 4130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 4120. In some embodiments, processing circuitry 4120 and device readable medium 4130 may be considered to be integrated.

User interface equipment 4132 may provide components that allow for a human user to interact with WD 4110. Such interaction may be of many forms, such as visual, audial, tactile, etc. User interface equipment 4132 may be operable to produce output to the user and to allow the user to provide input to WD 4110. The type of interaction may vary depending on the type of user interface equipment 4132 installed in WD 4110. For example, if WD 4110 is a smart phone, the interaction may be via a touch screen; if WD 4110 is a smart meter, the interaction may be through a screen that provides usage (e.g., the number of gallons used) or a speaker that provides an audible alert (e.g., if smoke is detected). User interface equipment 4132 may include input interfaces, devices and circuits, and output interfaces, devices and circuits. User interface equipment 4132 is configured to allow input of information into WD 4110, and is connected to processing circuitry 4120 to allow processing circuitry 4120 to process the input information. User interface equipment 4132 may include, for example, a microphone, a proximity or other sensor, keys/buttons, a touch display, one or more cameras, a USB port, or other input circuitry. User interface equipment 4132 is also configured to allow output of information from WD 4110, and to allow processing circuitry 4120 to output information from WD 4110. User interface equipment 4132 may include, for example, a speaker, a display, vibrating circuitry, a USB port, a headphone interface, or other output circuitry. Using one or more input and output interfaces, devices, and circuits, of user interface equipment 4132, WD 4110 may communicate with end users and/or the wireless network, and allow them to benefit from the functionality described herein.

Auxiliary equipment 4134 is operable to provide more specific functionality which may not be generally performed by WDs. This may comprise specialized sensors for doing measurements for various purposes, interfaces for additional types of communication such as wired communications etc. The inclusion and type of components of auxiliary equipment 4134 may vary depending on the embodiment and/or scenario.

Power source 4136 may, in some embodiments, be in the form of a battery or battery pack. Other types of power sources, such as an external power source (e.g., an electricity outlet), photovoltaic devices or power cells, may also be used. WD 4110 may further comprise power circuitry 4137 for delivering power from power source 4136 to the various parts of WD 4110 which need power from power source 4136 to carry out any functionality described or indicated herein. Power circuitry 4137 may in certain embodiments comprise power management circuitry. Power circuitry 4137 may additionally or alternatively be operable to receive power from an external power source; in which case WD 4110 may be connectable to the external power source (such as an electricity outlet) via input circuitry or an interface such as an electrical power cable. Power circuitry 4137 may also in certain embodiments be operable to deliver power from an external power source to power source 4136. This may be, for example, for the charging of power source 4136. Power circuitry 4137 may perform any formatting, converting, or other modification to the power from power source 4136 to make the power suitable for the respective components of WD 4110 to which power is supplied.

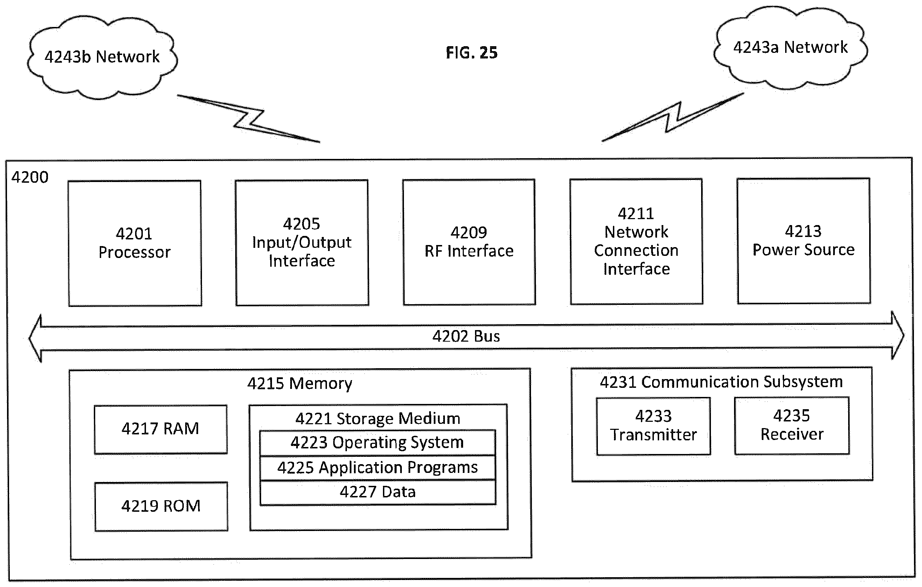

FIG. 25 illustrates a user Equipment in accordance with some embodiments.

FIG. 25 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 42200 may be any UE identified by the 3rd Generation Partnership Project (3GPP), including a NB-IoT UE, a machine type communication (MTC) UE, and/or an enhanced MTC (eMTC) UE. UE 4200, as illustrated in FIG. 25, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although FIG. 25 is a UE, the components discussed herein are equally applicable to a WD, and vice-versa.

In FIG. 25, UE 4200 includes processing circuitry 4201 that is operatively coupled to input/output interface 4205, radio frequency (RF) interface 4209, network connection interface 4211, memory 4215 including random access memory (RAM) 4217, read-only memory (ROM) 4219, and storage medium 4221 or the like, communication subsystem 4231, power source 4213, and/or any other component, or any combination thereof. Storage medium 4221 includes operating system 4223, application program 4225, and data 4227. In other embodiments, storage medium 4221 may include other similar types of information. Certain UEs may utilize all of the components shown in FIG. 25, or only a subset of the components. The level of integration between the components may vary from one UE to another UE. Further, certain UEs may contain multiple instances of a component, such as multiple processors, memories, transceivers, transmitters, receivers, etc.

In FIG. 25, processing circuitry 4201 may be configured to process computer instructions and data. Processing circuitry 4201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 4201 may include two central processing units (CPUs). Data may be information in a form suitable for use by a computer.

In the depicted embodiment, input/output interface 4205 may be configured to provide a communication interface to an input device, output device, or input and output device. UE 4200 may be configured to use an output device via input/output interface 4205. An output device may use the same type of interface port as an input device. For example, a USB port may be used to provide input to and output from UE 4200. The output device may be a speaker, a sound card, a video card, a display, a monitor, a printer, an actuator, an emitter, a smartcard, another output device, or any combination thereof. UE 4200 may be configured to use an input device via input/output interface 4205 to allow a user to capture information into UE 4200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIG. 25, RF interface 4209 may be configured to provide a communication interface to RF components such as a transmitter, a receiver, and an antenna. Network connection interface 4211 may be configured to provide a communication interface to network 4243a. Network 4243a may encompass wired and/or wireless networks such as a local-area network (LAN), a wide-area network (WAN), a computer network, a wireless network, a telecommunications network, another like network or any combination thereof. For example, network 4243a may comprise a Wi-Fi network. Network connection interface 4211 may be configured to include a receiver and a transmitter interface used to communicate with one or more other devices over a communication network according to one or more communication protocols, such as Ethernet, TCP/IP, SONET, ATM, or the like. Network connection interface 4211 may implement receiver and transmitter functionality appropriate to the communication network links (e.g., optical, electrical, and the like). The transmitter and receiver functions may share circuit components, software or firmware, or alternatively may be implemented separately.

RAM 4217 may be configured to interface via bus 4202 to processing circuitry 4201 to provide storage or caching of data or computer instructions during the execution of software programs such as the operating system, application programs, and device drivers. ROM 4219 may be configured to provide computer instructions or data to processing circuitry 4201. For example, ROM 4219 may be configured to store invariant low-level system code or data for basic system functions such as basic input and output (I/O), startup, or reception of keystrokes from a keyboard that are stored in a non-volatile memory. Storage medium 4221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 4221 may be configured to include operating system 4223, application program 4225 such as a web browser application, a widget or gadget engine or another application, and data file 4227. Storage medium 4221 may store, for use by UE 4200, any of a variety of various operating systems or combinations of operating systems.

Storage medium 4221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 4221 may allow UE 4200 to access computer-executable instructions, application programs or the like, stored on transitory or non-transitory memory media, to off-load data, or to upload data. An article of manufacture, such as one utilizing a communication system may be tangibly embodied in storage medium 4221, which may comprise a device readable medium.

In FIG. 25, processing circuitry 4201 may be configured to communicate with network 4243b using communication subsystem 4231. Network 4243a and network 4243b may be the same network or networks or different network or networks. Communication subsystem 4231 may be configured to include one or more transceivers used to communicate with network 4243b. For example, communication subsystem 4231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 4233 and/or receiver 4235 to implement transmitter or receiver functionality, respectively, appropriate to the RAN links (e.g.,

frequency allocations and the like). Further, transmitter 4233 and receiver 4235 of each transceiver may share circuit components, software or firmware, or alternatively may be implemented separately.

In the illustrated embodiment, the communication functions of communication subsystem 4231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 4231 may include cellular communication, Wi-Fi communication, Bluetooth communication, and GPS communication. Network 4243b may encompass wired and/or wireless networks such as a local-area network (LAN), a wide-area network (WAN), a computer network, a wireless network, a telecommunications network, another like network or any combination thereof. For example, network 4243b may be a cellular network, a Wi-Fi network, and/or a near-field network. Power source 4213 may be configured to provide alternating current (AC) or direct current (DC) power to components of UE 4200.

The features, benefits and/or functions described herein may be implemented in one of the components of UE 4200 or partitioned across multiple components of UE 4200. Further, the features, benefits, and/or functions described herein may be implemented in any combination of hardware, software or firmware. In one example, communication subsystem 4231 may be configured to include any of the components described herein. Further, processing circuitry 4201 may be configured to communicate with any of such components over bus 4202. In another example, any of such components may be represented by program instructions stored in memory that when executed by processing circuitry 4201 perform the corresponding functions described herein. In another example, the functionality of any of such components may be partitioned between processing circuitry 4201 and communication subsystem 4231. In another example, the non-computationally intensive functions of any of such components may be implemented in software or firmware and the computationally intensive functions may be implemented in hardware.

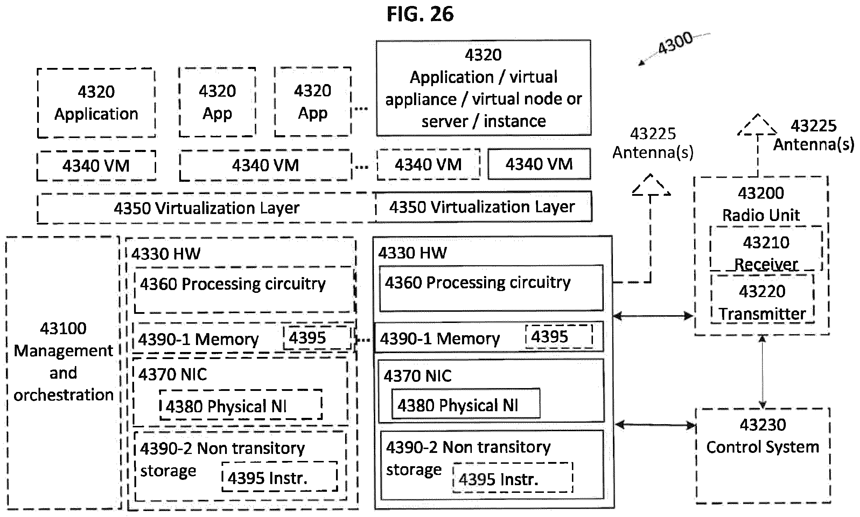

FIG. 26 illustrates a virtualization environment in accordance with some embodiments.

FIG. 26 is a schematic block diagram illustrating a virtualization environment 4300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 4300 hosted by one or more of hardware nodes 4330. Further, in embodiments in which the virtual node is not a radio access node or does not require radio connectivity (e.g., a core network node), then the network node may be entirely virtualized.

The functions may be implemented by one or more applications 4320 (which may alternatively be called software instances, virtual appliances, network functions, virtual nodes, virtual network functions, etc.) operative to implement some of the features, functions, and/or benefits of some of the embodiments disclosed herein. Applications 4320 are run in virtualization environment 4300 which provides hardware 4330 comprising processing circuitry 4360 and memory 4390. Memory 4390 contains instructions 4395 executable by processing circuitry 4360 whereby application 4320 is operative to provide one or more of the features, benefits, and/or functions disclosed herein.

Virtualization environment 4300, comprises general-purpose or special-purpose network hardware devices 4330 comprising a set of one or more processors or processing circuitry 4360, which may be commercial off-the-shelf (COTS) processors, dedicated Application Specific Integrated Circuits (ASICs), or any other type of processing circuitry including digital or analog hardware components or special purpose processors. Each hardware device may comprise memory 4390-1 which may be non-persistent memory for temporarily storing instructions 4395 or software executed by processing circuitry 4360. Each hardware device may comprise one or more network interface controllers (NICs) 4370, also known as network interface cards, which include physical network interface 4380. Each hardware device may also include non-transitory, persistent, machine-readable storage media 4390-2 having stored therein software 4395 and/or instructions executable by processing circuitry 4360. Software 4395 may include any type of software including software for instantiating one or more virtualization layers 4350 (also referred to as hypervisors), software to execute virtual machines 4340 as well as software allowing it to execute functions, features and/or benefits described in relation with some embodiments described herein.

Virtual machines 4340 comprise virtual processing, virtual memory, virtual networking or interface and virtual storage, and may be run by a corresponding virtualization layer 4350 or hypervisor. Different embodiments of the instance of virtual appliance 4320 may be implemented on one or more of virtual machines 4340, and the implementations may be made in different ways.

During operation, processing circuitry 4360 executes software 4395 to instantiate the hypervisor or virtualization layer 4350, which may sometimes be referred to as a virtual machine monitor (VMM). Virtualization layer 4350 may present a virtual operating platform that appears like networking hardware to virtual machine 4340.

As shown in FIG. 26, hardware 4330 may be a standalone network node with generic or specific components. Hardware 4330 may comprise antenna 43225 and may implement some functions via virtualization. Alternatively, hardware 4330 may be part of a larger cluster of hardware (e.g. such as in a data center or customer premise equipment (CPE)) where many hardware nodes work together and are managed via management and orchestration (MANO) 43100, which, among others, oversees lifecycle management of applications 4320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 4340 may be a software implementation of a physical machine that runs programs as if they were executing on a physical, non-virtualized machine. Each of virtual machines 4340, and that part of hardware 4330 that executes that virtual machine, be it hardware dedicated to that virtual machine and/or hardware shared by that virtual machine with others of the virtual machines 4340, forms a separate virtual network elements (VNE).

Still in the context of NFV, Virtual Network Function (VNF) is responsible for handling specific network functions that run in one or more virtual machines 4340 on top of hardware networking infrastructure 4330 and corresponds to application 4320 in FIG. 26.

In some embodiments, one or more radio units 43200 that each include one or more transmitters 43220 and one or more receivers 43210 may be coupled to one or more antennas 43225. Radio units 43200 may communicate directly with hardware nodes 4330 via one or more appropriate network interfaces and may be used in combination with the virtual components to provide a virtual node with radio capabilities, such as a radio access node or a base station.

In some embodiments, some signalling can be effected with the use of control system 43230 which may alternatively be used for communication between the hardware nodes 4330 and radio units 43200.

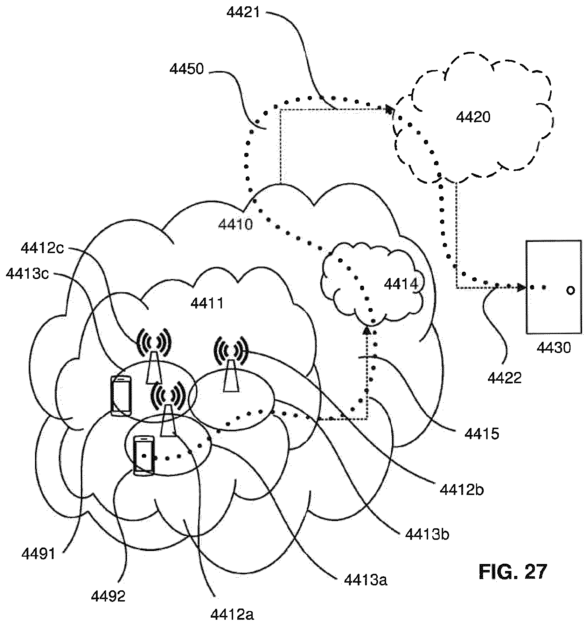

FIG. 27 illustrates a telecommunication network connected via an intermediate network to a host computer in accordance with some embodiments.

With reference to FIG. 27, in accordance with an embodiment, a communication system includes telecommunication network 4410, such as a 3GPP-type cellular network, which comprises access network 4411, such as a radio access network, and core network 4414. Access network 4411 comprises a plurality of base stations 4412a, 4412b, 4412c, such as NBs, eNBs, gNBs or other types of wireless access points, each defining a corresponding coverage area 4413a, 4413b, 4413c. Each base station 4412a, 4412b, 4412c is connectable to core network 4414 over a wired or wireless connection 4415. A first UE 4491 located in coverage area 4413c is configured to wirelessly connect to, or be paged by, the corresponding base station 4412c. A second UE 4492 in coverage area 4413a is wirelessly connectable to the corresponding base station 4412a. While a plurality of UEs 4491, 4492 are illustrated in this example, the disclosed embodiments are equally applicable to a situation where a sole UE is in the coverage area or where a sole UE is connecting to the corresponding base station 4412.

Telecommunication network 4410 is itself connected to host computer 4430, which may be embodied in the hardware and/or software of a standalone server, a cloud-implemented server, a distributed server or as processing resources in a server farm. Host computer 4430 may be under the ownership or control of a service provider, or may be operated by the service provider or on behalf of the service provider. Connections 4421 and 4422 between telecommunication network 4410 and host computer 4430 may extend directly from core network 4414 to host computer 4430 or may go via an optional intermediate network 4420. Intermediate network 4420 may be one of, or a combination of more than one of, a public, private or hosted network; intermediate network 4420, if any, may be a backbone network or the Internet; in particular, intermediate network 4420 may comprise two or more sub-networks (not shown).

The communication system of FIG. 27 as a whole enables connectivity between the connected UEs 4491, 4492 and host computer 4430. The connectivity may be described as an over-the-top (OTT) connection 4450. Host computer 4430 and the connected UEs 4491, 4492 are configured to communicate data and/or signaling via OTT connection 4450, using access network 4411, core network 4414, any intermediate network 4420 and possible further infrastructure (not shown) as intermediaries. OTT connection 4450 may be transparent in the sense that the participating communication devices through which OTT connection 4450 passes are unaware of routing of uplink and downlink communications. For example, base station 4412 may not or need not be informed about the past routing of an incoming downlink communication with data originating from host computer 4430 to be forwarded (e.g., handed over) to a connected UE 4491. Similarly, base station 4412 need not be aware of the future routing of an outgoing uplink communication originating from the UE 4491 towards the host computer 4430.

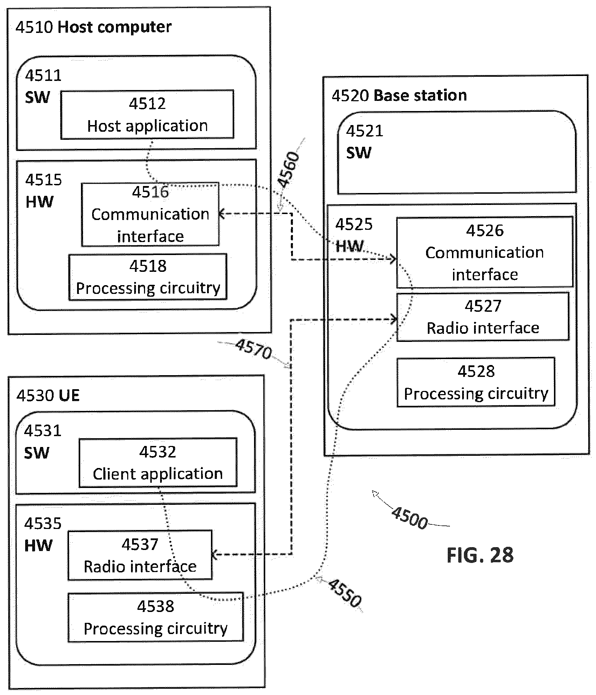

FIG. 28 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to FIG. 28. In communication system 4500, host computer 4510 comprises hardware 4515 including communication interface 4516 configured to set up and maintain a wired or wireless connection with an interface of a different communication device of communication system 4500. Host computer 4510 further comprises processing circuitry 4518, which may have storage and/or processing capabilities. In particular, processing circuitry 4518 may comprise one or more programmable processors, application-specific integrated circuits, field programmable gate arrays or combinations of these (not shown) adapted to execute instructions. Host computer 4510 further comprises software 4511, which is stored in or accessible by host computer 4510 and executable by processing circuitry 4518. Software 4511 includes host application 4512. Host application 4512 may be operable to provide a service to a remote user, such as UE 4530 connecting via OTT connection 4550 terminating at UE 4530 and host computer 4510. In providing the service to the remote user, host application 4512 may provide user data which is transmitted using OTT connection 4550.

Communication system 4500 further includes base station 4520 provided in a telecommunication system and comprising hardware 4525 enabling it to communicate with host computer 4510 and with UE 4530. Hardware 4525 may include communication interface 4526 for setting up and maintaining a wired or wireless connection with an interface of a different communication device of communication system 4500, as well as radio interface 4527 for setting up and maintaining at least wireless connection 4570 with UE 4530 located in a coverage area (not shown in FIG. 28) served by base station 4520. Communication interface 4526 may be configured to facilitate connection 4560 to host computer 4510. Connection 4560 may be direct or it may pass through a core network (not shown in FIG. 28) of the telecommunication system and/or through one or more intermediate networks outside the telecommunication system. In the embodiment shown, hardware 4525 of base station 4520 further includes processing circuitry 4528, which may comprise one or more programmable processors, application-specific integrated circuits, field programmable gate arrays or combinations of these (not shown) adapted to execute instructions. Base station 4520 further has software 4521 stored internally or accessible via an external connection.

Communication system 4500 further includes UE 4530 already referred to. Its hardware 4535 may include radio interface 4537 configured to set up and maintain wireless connection 4570 with a base station serving a coverage area in which UE 4530 is currently located. Hardware 4535 of UE 4530 further includes processing circuitry 4538, which may comprise one or more programmable processors, application-specific integrated circuits, field programmable gate arrays or combinations of these (not shown) adapted to execute instructions. UE 4530 further comprises software 4531, which is stored in or accessible by UE 4530 and executable by processing circuitry 4538. Software 4531 includes client application 4532. Client application 4532 may be operable to provide a service to a human or non-human user via UE 4530, with the support of host computer 4510. In host computer 4510, an executing host application 4512 may communicate with the executing client application 4532 via OTT connection 4550 terminating at UE 4530 and host computer 4510. In providing the service to the user, client application 4532 may receive request data from host application 4512 and provide user data in response to the request data. OTT connection 4550 may transfer both the request data and the user data. Client application 4532 may interact with the user to generate the user data that it provides.

It is noted that host computer 4510, base station 4520 and UE 4530 illustrated in FIG. 28 may be similar or identical to host computer 4430, one of base stations 4412a, 4412b, 4412c and one of UEs 4491, 4492 of FIG. 27, respectively. This is to say, the inner workings of these entities may be as shown in FIG. 28 and independently, the surrounding network topology may be that of FIG. 27.

In FIG. 28, OTT connection 4550 has been drawn abstractly to illustrate the communication between host computer 4510 and UE 4530 via base station 4520, without explicit reference to any intermediary devices and the precise routing of messages via these devices. Network infrastructure may determine the routing, which it may be configured to hide from UE 4530 or from the service provider operating host computer 4510, or both. While OTT connection 4550 is active, the network infrastructure may further take decisions by which it dynamically changes the routing (e.g., on the basis of load balancing consideration or reconfiguration of the network).

Wireless connection 4570 between UE 4530 and base station 4520 is in accordance with the teachings of the embodiments described throughout this disclosure. One or more of the various embodiments may improve the performance of OTT services provided to UE 4530 using OTT connection 4550, in which wireless connection 4570 forms the last segment. More precisely, the teachings of these embodiments may improve the random access speed and/or reduce random access failure rates and thereby provide benefits such as faster and/or more reliable random access.

A measurement procedure may be provided for the purpose of monitoring data rate, latency and other factors on which the one or more embodiments improve. There may further be an optional network functionality for reconfiguring OTT connection 4550 between host computer 4510 and UE 4530, in response to variations in the measurement results. The measurement procedure and/or the network functionality for reconfiguring OTT connection 4550 may be implemented in software 4511 and hardware 4515 of host computer 4510 or in software 4531 and hardware 4535 of UE 4530, or both. In embodiments, sensors (not shown) may be deployed in or in association with communication devices through which OTT connection 4550 passes; the sensors may participate in the measurement procedure by supplying values of the monitored quantities exemplified above, or supplying values of other physical quantities from which software 4511, 4531 may compute or estimate the monitored quantities. The reconfiguring of OTT connection 4550 may include message format, retransmission settings, preferred routing etc.; the reconfiguring need not affect base station 4520, and it may be unknown or imperceptible to base station 4520. Such procedures and functionalities may be known and practiced in the art. In certain embodiments, measurements may involve proprietary UE signaling facilitating host computer 4510's measurements of throughput, propagation times, latency and the like. The measurements may be implemented in that software 4511 and 4531 causes messages to be transmitted, in particular empty or 'dummy' messages, using OTT connection 4550 while it monitors propagation times, errors etc.

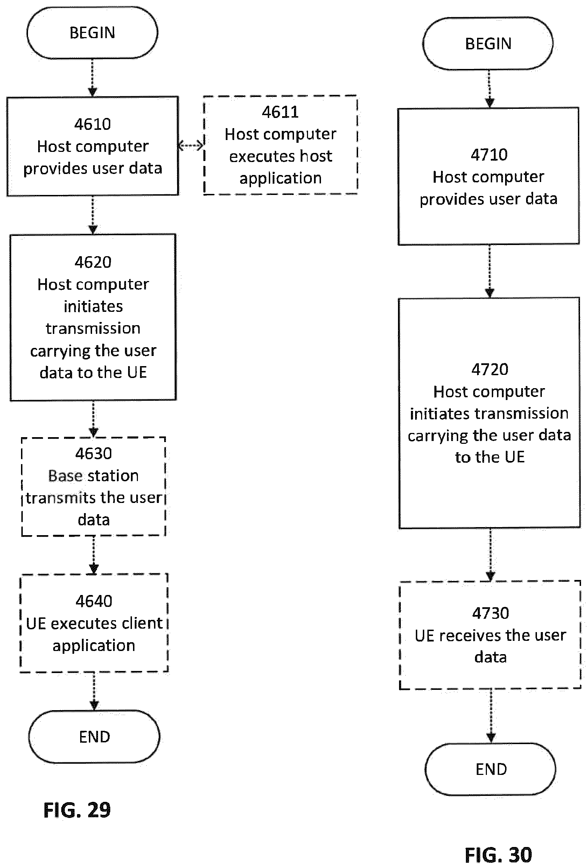

FIG. 29 illustrates methods implemented in a communication system including a host computer, a base station and a user equipment in accordance with some embodiments

FIG. 29 is a flowchart illustrating a method implemented in a communication system, in accordance with one embodiment. The communication system includes a host computer, a base station and a UE which may be those described with reference to FIGS. 27-28. For simplicity of the present disclosure, only drawing references to FIG. 29 will be included in this section. In step 4610, the host computer provides user data. In substep 4611 (which may be optional) of step 4610, the host computer provides the user data by executing a host application. In step 4620, the host computer initiates a transmission carrying the user data to the UE. In step 4630 (which may be optional), the base station transmits to the UE the user data which was carried in the transmission that the host computer initiated, in accordance with the teachings of the embodiments described throughout this disclosure. In step 4640 (which may also be optional), the UE executes a client application associated with the host application executed by the host computer.

FIG. 30 illustrates methods implemented in a communication system including a host computer, a base station and a user equipment in accordance with some embodiments.

FIG. 30 is a flowchart illustrating a method implemented in a communication system, in accordance with one embodiment. The communication system includes a host computer, a base station and a UE which may be those described with reference to FIGS. 27-28. For simplicity of the present disclosure, only drawing references to FIG. 30 will be included in this section. In step 4710 of the method, the host computer provides user data. In an optional substep (not shown) the host computer provides the user data by executing a host application. In step 4720, the host computer initiates a transmission carrying the user data to the UE. The transmission may pass via the base station, in accordance with the teachings of the embodiments described throughout this disclosure. In step 4730 (which may be optional), the UE receives the user data carried in the transmission.

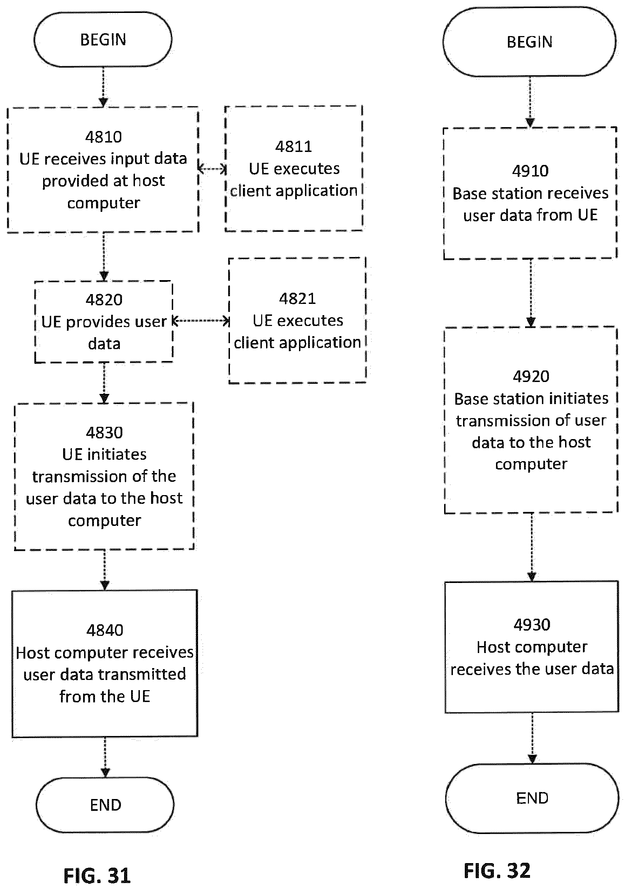

FIG. 31 illustrates methods implemented in a communication system including a host computer, a base station and a user equipment in accordance with some embodiments

FIG. 31 is a flowchart illustrating a method implemented in a communication system, in accordance with one embodiment. The communication system includes a host computer, a base station and a UE which may be those described with reference to FIGS. 27-28. For simplicity of the present disclosure, only drawing references to FIG. 31 will be included in this section. In step 4810 (which may be optional), the UE receives input data provided by the host computer. Additionally or alternatively, in step 4820, the UE provides user data. In substep 4821 (which may be optional) of step 4820, the UE provides the user data by executing a client application. In substep 4811 (which may be optional) of step 4810, the UE executes a client application which provides the user data in reaction to the received input data provided by the host computer. In providing the user data, the executed client application may further consider user input received from the user. Regardless of the specific manner in which the user data was provided, the UE initiates, in substep 4830 (which may be optional), transmission of the user data to the host computer. In step 4840 of the method, the host computer receives the user data transmitted from the UE, in accordance with the teachings of the embodiments described throughout this disclosure.

FIG. 32 illustrates methods implemented in a communication system including a host computer, a base station and a user equipment in accordance with some embodiments

FIG. 32 is a flowchart illustrating a method implemented in a communication system, in accordance with one embodiment. The communication system includes a host computer, a base station and a UE which may be those described with reference to FIGS. 27-28. For simplicity of the present disclosure, only drawing references to FIG. 32 will be included in this section. In step 4910 (which may be optional), in accordance with the teachings of the embodiments described throughout this disclosure, the base station receives user data from the UE. In step 4920 (which may be optional), the base station initiates transmission of the received user data to the host computer. In step 4930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| 1x RTT | CDMA2000 1x Radio Transmission Technology |
| 3GPP | 3rd Generation Partnership Project |
| 5G | 5th Generation |
| ABS | Almost Blank Subframe |
| ARQ | Automatic Repeat Request |
| AWGN | Additive White Gaussian Noise |
| BCCH | Broadcast Control Channel |
| BCH | Broadcast Channel |
| CA | Carrier Aggregation |
| CC | Carrier Component |
| CCCH SDU | Common Control Channel SDU |
| CDMA | Code Division Multiplexing Access |
| CGI | Cell Global Identifier |
| CIR | Channel Impulse Response |
| CP | Cyclic Prefix |
| CPICH | Common Pilot Channel |
| CPICH | Ec/No CPICH Received energy per chip divided by the power density in the band |
| CQI | Channel Quality information |
| C-RNTI | Cell RNTI |
| CSI | Channel State Information |
| DCCH | Dedicated Control Channel |
| DL | Downlink |
| DM | Demodulation |
| DMRS | Demodulation Reference Signal |
| DRX | Discontinuous Reception |
| DTX | Discontinuous Transmission |
| DTCH | Dedicated Traffic Channel |
| DUT | Device Under Test |
| E-CID | Enhanced Cell-ID (positioning method) |
| E-SMLC | Evolved-Serving Mobile Location Centre |
| ECGI | Evolved CGI |
| eNB | E-UTRAN NodeB |
| ePDCCH | enhanced Physical Downlink Control Channel |
| E-SMLC | evolved Serving Mobile Location Center |
| E-UTRA | Evolved UTRA |
| E-UTRAN | Evolved UTRAN |
| FDD | Frequency Division Duplex |
| FFS | For Further Study |
| GERAN | GSM EDGE Radio Access Network |
| gNB | Base station in NR |
| GNSS | Global Navigation Satellite System |
| GSM | Global System for Mobile communication |
| HARQ | Hybrid Automatic Repeat Request |
| HO | Handover |
| HSPA | High Speed Packet Access |
| HRPD | High Rate Packet Data |

| | |
|---|---|
| LOS | Line of Sight |
| LPP | LTE Positioning Protocol |
| LTE | Long-Term Evolution |
| MAC | Medium Access Control |
| MBMS | Multimedia Broadcast Multicast Services |
| MBSFN | Multimedia Broadcast multicast service Single Frequency Network |
| MBSFN | ABS MBSFN Almost Blank Subframe |
| MDT | Minimization of Drive Tests |
| MIB | Master Information Block |
| MME | Mobility Management Entity |
| MSC | Mobile Switching Center |
| NPDCCH | Narrowband Physical Downlink Control Channel |
| NR | New Radio |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTDOA | Observed Time Difference of Arrival |
| O&M | Operation and Maintenance |
| PBCH | Physical Broadcast Channel |
| P-CCPCH | Primary Common Control Physical Channel |
| PCell | Primary Cell |
| PCFICH | Physical Control Format Indicator Channel |
| PDCCH | Physical Downlink Control Channel |
| PDP | Profile Delay Profile |
| PDSCH | Physical Downlink Shared Channel |
| PGW | Packet Gateway |
| PHICH | Physical Hybrid-ARQ Indicator Channel |
| PLMN | Public Land Mobile Network |
| PMI | Precoder Matrix Indicator |
| PRACH | Physical Random Access Channel |
| PRS | Positioning Reference Signal |
| PSS | Primary Synchronization Signal |
| PUCCH | Physical Uplink Control Channel |
| PUSCH | Physical Uplink Shared Channel |
| RACH | Random Access Channel |
| QAM | Quadrature Amplitude Modulation |
| RAN | Radio Access Network |
| RAT | Radio Access Technology |
| RLM | Radio Link Management |
| RNC | Radio Network Controller |
| RNTI | Radio Network Temporary Identifier |
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |
| RSTD | Reference Signal Time Difference |
| SCH | Synchronization Channel |
| SCell | Secondary Cell |
| SDU | Service Data Unit |
| SFN | System Frame Number |
| SGW | Serving Gateway |
| SI | System Information |
| SIB | System Information Block |
| SNR | Signal to Noise Ratio |

| SON | Self Optimized Network |
|---|---|
| SS | Synchronization Signal |
| SSS | Secondary Synchronization Signal |
| TDD | Time Division Duplex |
| TDOA | Time Difference of Arrival |
| TOA | Time of Arrival |
| TSS | Tertiary Synchronization Signal |
| TTI | Transmission Time Interval |
| UE | User Equipment |
| UL | Uplink |
| UMTS | Universal Mobile Telecommunication System |
| USIM | Universal Subscriber Identity Module |
| UTDOA | Uplink Time Difference of Arrival |
| UTRA | Universal Terrestrial Radio Access |
| UTRAN | Universal Terrestrial Radio Access Network |
| WCDMA | Wide CDMA |
| LAN | Wide Local Area Network |

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

## Claims

1. A method of operating a network node in a communication network, the method comprising:

   receiving (1710) a radio resource control, RRC, connection setup request from a communication device, the RRC connection setup request indicating that the communication device is capable of entering an unavailable state; and
   responsive to receiving the RRC connection setup request, transmitting (1720) a second message indicating that the network node supports unavailability requests.

2. A method of operating a network node in a communication network, the method comprising:

   transmitting (1810) a radio resource connection, RRC, setup message to a communication device, indicating that the network node supports unavailability requests; and
   responsive to transmitting the RRC setup message, receiving (1820) a RRC connection setup confirmation from the communication device indicating that the communication device is capable of entering the unavailable state.

3. A network node (1100) operating in a communication network, the network node comprising:

   processing circuitry (1103); and
   memory (1105) coupled to the processing circuitry and having instructions stored therein that are executable by the processing circuitry to cause the network node to perform the method of Claim 1 or 2.

4. A computer program product comprising a non-transitory storage medium (1105) including program code to be executed by processing circuitry (1103) of a network node (1100) operating in a communication network, whereby execution of the program code causes the network node to perform the method of Claim 1 or 2.

## Patentansprüche

1. Verfahren zum Betreiben eines Netzwerkknotens in einem Kommunikationsnetzwerk, wobei das Verfahren Folgendes umfasst:

   Empfangen (1710) einer Funkressourcensteuerungs-Verbindungsaufbauanforderung, RRC-Verbindungsaufbauanforderung, von einer Kommunikationsvorrichtung, wobei die RRC-Verbindungsaufbauanforderung angibt, dass die Kommunikationsvorrichtung in der Lage ist, in einen Nichtverfügbarkeitszustand einzutreten; und
   in Reaktion auf das Empfangen der RRC-Verbindungsaufbauanforderung Senden (1720) einer zweiten Nachricht, die angibt, dass der Netzwerkknoten Nichtverfügbarkeitsanforderungen unterstützt.

**2.** Verfahren zum Betreiben eines Netzwerkknotens in einem Kommunikationsnetzwerk, wobei das Verfahren Folgendes umfasst:

Senden (1810) einer Funkressourcenverbindungsaufbaunachricht, RRC-Aufbaunachricht, an eine Kommunikationsvorrichtung, die angibt, dass der Netzwerkknoten Nichtverfügbarkeitsanforderungen unterstützt; und in Reaktion auf das Senden der RRC-Aufbaunachricht Empfangen (1820) einer RRC-Verbindungsaufbaubestätigung von der Kommunikationsvorrichtung, die angibt, dass die Kommunikationsvorrichtung in der Lage ist, in den Nichtverfügbarkeitszustand einzutreten.

**3.** Netzwerkknoten (1100), der in einem Kommunikationsnetzwerk operiert, wobei der Netzwerkknoten Folgendes umfasst:

Verarbeitungsschaltungsanordnung (1103); und
Speicher (1105), der mit der Verarbeitungsschaltungsanordnung gekoppelt ist und darin gespeicherte Anweisungen aufweist, die von der Verarbeitungsschaltungsanordnung ausgeführt werden können, um den Netzwerkknoten zum Durchführen des Verfahrens nach 1 oder 2 zu veranlassen.

**4.** Computerprogrammprodukt, umfassend ein nichtflüchtiges Speichermedium (1105), das Programmcode umfasst, der von Verarbeitungsschaltungsanordnung (1103) eines Netzwerkknotens (1100), der in einem Kommunikationsnetzwerk operiert, ausgeführt werden soll, wobei die Ausführung des Programmcodes den Netzwerkknoten zum Durchführen des Verfahrens nach Anspruch 1 oder 2 veranlasst.

**Revendications**

**1.** Procédé de fonctionnement d'un nœud de réseau dans un réseau de communication, le procédé comprenant :

la réception (1710) d'une demande d'établissement de connexion de commande de ressources radio, RRC, depuis un dispositif de communication, la demande d'établissement de connexion RRC indiquant que le dispositif de communication est capable d'entrer dans un état indisponible ; et
en réponse à la réception de la demande d'établissement de connexion RRC, la transmission (1720) d'un deuxième message indiquant que le nœud de réseau prend en charge des demandes d'indisponibilité.

**2.** Procédé de fonctionnement d'un nœud de réseau dans un réseau de communication, le procédé comprenant :

la transmission (1810) d'un message d'établissement de connexion de commande de ressources radio, RRC, à un dispositif de communication, indiquant que le nœud de réseau prend en charge des demandes d'indisponibilité ; et
en réponse à la transmission du message d'établissement de connexion RRC, la réception (1820) d'une confirmation d'établissement de connexion RRC depuis le dispositif de communication, indiquant que le dispositif de communication est capable d'entrer dans l'état indisponible.

**3.** Nœud de réseau (1100) fonctionnant dans un réseau de communication, le nœud de réseau comprenant :

une circuiterie de traitement (1103) ; et
une mémoire (1105) couplée à la circuiterie de traitement et stockant des instructions qui sont exécutables par la circuiterie de traitement pour amener le nœud de réseau à réaliser le procédé selon la revendication 1 ou 2.

**4.** Produit de programme informatique comprenant un support de stockage non transitoire (1105) incluant un code de programme à exécuter par une circuiterie de traitement (1103) d'un nœud de réseau (1100) fonctionnant dans un réseau de communication, selon lequel une exécution du code de programme amène le nœud de réseau à réaliser le procédé selon la revendication 1 ou 2.

FIG. 1

FIG. 2

| UE 120 | | NG-RAN 110 |
|---|---|---|

310: RRC_CONNECTED

320: RRC Reconfiguration (Use Unavailability Request)

330: RRC Reconfiguration Complete

## FIG. 3

| UE 120 | | NG-RAN 110 |
|---|---|---|

410: RRC_CONNECTED

420: RRC Reconfiguration

430: RRC Reconfiguration Complete (Unavailability Info)

## FIG. 4

FIG. 5

FIG. 6

FIG. 7

UE
120

NG-RAN
110

810a: RRC_CONNECTED

810b: RRC_CONNECTED

820: MAC PDU (Not-Predetermined gap)

830: Stop Scheduling

840: Start Internal Timer

850: UE switches to the other
PLMN

860: Timer Expires

870: UE is considered as lost;
and release connection

880: RRC_IDLE

## FIG. 8

| R | F | LCID (new value) |
|---|---|---|

- MAC subheader

| B | Gap Duration or Padding |
|---|---|

- MAC CE (new)

## FIG. 9

Communication Device (UE)
1000

1007

Transceiver
1001

Processor
1003

Memory
1005

## FIG. 10

Radio Access Network (RAN) Node
1100

Transceiver
1101

Network Interface
1107

Processor
1103

Memory
1105

## FIG. 11

Core Network (CN) Node
1200

Network Interface
1207

Processor
1203

Memory
1205

## FIG. 12

| Receive a message from a UE connected to the network node indicating that the UE will enter an unavailable state 1310 |
|---|

↓

| Prevent scheduling of a transmission to the UE 1320 |
|---|

## FIG. 13

| Receive a second message from the UE indicating that he UE has returned to an available state 1430 |
|---|

↓

| Resume scheduling of the transmission to the UE 1440 |
|---|

↓

| Prevent a period of time between preventing the scheduling of the transmission and resuming the scheduling of the transmission from being considered from a QoS perspective 1445 |
|---|

↓

| Transmit data to the UE 1450 |
|---|

↓

Determine whether an amount of time since transmitting the data exceeds a predetermined amount of time 1470 — Yes

| No

↓

| Receive an acknowledgment message from the UE indicating that the UE received the data 1460 |
|---|

↓

| Release a connection with the UE 1480 |
|---|

## FIG. 14

```
┌─────────────────────────────────────────────────────────────────────────────────┐
│ Determine that an amount of time since receiving the message exceeds a threshold  │
│ amount of time                                                                    │
│                                                                          1530     │
└─────────────────────────────────────────────────────────────────────────────────┘
                                        │
                                        ▼
┌─────────────────────────────────────────────────────────────────────────────────┐
│               Resume scheduling of the transmission to the UE                     │
│                                                                          1540     │
└─────────────────────────────────────────────────────────────────────────────────┘
                                        │
                                        ▼
┌─────────────────────────────────────────────────────────────────────────────────┐
│ Prevent a period of time between preventing the scheduling of the transmission    │
│ and resuming the scheduling of the transmission from being considered from a      │
│ QoS perspective                                                          1545     │
└─────────────────────────────────────────────────────────────────────────────────┘
                                        │
                                        ▼
┌─────────────────────────────────────────────────────────────────────────────────┐
│                          Transmit data to the UE                                  │
│                                                                          1550     │
└─────────────────────────────────────────────────────────────────────────────────┘
                                        │
                                        ▼
```

Determine whether an amount of time since transmitting the data exceeds a predetermined amount of time  1570    Yes

No

```
┌─────────────────────────────────────────────────────────────────────────────────┐
│ Receive an acknowledgment message from the UE indicating that the UE received     │
│ the data                                                                          │
│                                                                          1560     │
└─────────────────────────────────────────────────────────────────────────────────┘
                                        │
                                        ▼
┌─────────────────────────────────────────────────────────────────────────────────┐
│                       Release a connection with the UE                            │
│                                                                          1580     │
└─────────────────────────────────────────────────────────────────────────────────┘
```

# FIG. 15

```
┌─────────────────────────────────────────────────────────────────────────────────┐
│ Determine a threshold duration based on a type of a connection between the UE     │
│ and the network node                                                              │
│                                                                          1630     │
└─────────────────────────────────────────────────────────────────────────────────┘
                                        │
                                        ▼
┌─────────────────────────────────────────────────────────────────────────────────┐
│ Determine that an amount of time since receiving the message exceeds the          │
│ threshold duration                                                       1640     │
└─────────────────────────────────────────────────────────────────────────────────┘
                                        │
                                        ▼
┌─────────────────────────────────────────────────────────────────────────────────┐
│                       Release the connection with the UE                          │
│                                                                          1650     │
└─────────────────────────────────────────────────────────────────────────────────┘
```

# FIG. 16

Receive a RRC connection setup request from the UE indicating that the UE is capable of entering the unavailable state
1710

Transmit a second message indicating that the network node supports unavailability requests
1720

## FIG. 17

Transmit a RRC setup message the UE indicating that the network node supports unavailability requests
1810

Receive a RRC connection setup confirmation from the UE indicating that the UE is capable of entering the unavailable state
1820

## FIG. 18

Transmit a message to a network node that is connected to the UE indicating that the UE will enter an unavailable state
1910

Transition to an unavailable state with the network node
1920

## FIG. 19

Transmit a second message to the network node indicating that the UE has returned to an available state
2030

Receive data from the network node
2040

Transmit an acknowledgment message to the network node indicating that the UE received the data
2050

# FIG. 20

Responsive to an amount of time since transmitting the message exceeding the duration of the unavailable state, receive data from the network node
2130

Transmit an acknowledgment message to the network node indicating that the UE received the data
2140

# FIG. 21

Transmit a RRC connection setup request indicating that the UE is capable of entering the unavailable state
2210

Receive a second message indicating that the network node supports unavailability requests
2220

# FIG. 22

Receive a RRC setup message from the network node indicating that the network node supports availability requests

2310

Transmit a RRC connection setup confirmation indicating that the UE is capable of entering the unavailable state

2320

# FIG. 23

# FIG. 24

4110b WIRELESS DEVICE

4160b NETWORK NODE

4106 NETWORK

WIRELESS SIGNAL

4110c WIRELESS DEVICE

**4110 WIRELESS DEVICE**

4111 ANTENNA(S)

4114 INTERFACE

4112 RADIO FRONT END CIRCUITRY

4118 FILTER(S) | 4116 AMPLIFIER(S)

4122 RF TRANCEIVER CIRCUITRY | 4126 APPLICATION PROCESSING CIRCUITRY

4124 BASEBAND CIRCUITRY | 4120 PROCESSING CIRCUITRY

4137 POWER CIRCUITRY

4130 DEVICE READABLE MEDIUM

4132 USER INTERFACE EQUIPMENT

4134 AUXILIARY EQUIPMENT

4136 POWER SOURCE

**4160 NETWORK NODE**

4162 ANTENNA(S)

4192 RADIO FRONT END CIRCUITRY

4198 FILTER(S)

4196 AMPLIFIER(S)

4194 PORTS/ TERMINALS

4190 INTERFACE

4187 POWER CIRCUITRY

4172 RF TRANCEIVER CIRCUITRY

4174 BASEBAND CIRCUITRY | 4170 PROCESSING CIRCUITRY

4180 DEVICE READABLE MEDIUM

4184 AUXILIARY EQUIPMENT

4186 POWER SOURCE

EP 4 247 114 B1

FIG. 25

4243a Network

4243b Network

4200

4201 Processor

4205 Input/Output Interface

4209 RF Interface

4211 Network Connection Interface

4213 Power Source

4202 Bus

4215 Memory

4217 RAM

4219 ROM

4221 Storage Medium
4223 Operating System
4225 Application Programs
4227 Data

4231 Communication Subsystem

4233 Transmitter

4235 Receiver

EP 4 247 114 B1

**FIG. 26**

4320 Application / virtual appliance / virtual node or server / instance

4340 VM

4350 Virtualization Layer

4320 App

4320 App

4340 VM

4340 VM

4350 Virtualization Layer

4320 Application

4340 VM

4330 HW

4360 Processing circuitry

4390-1 Memory

4395

4370 NIC

4380 Physical NI

4390-2 Non transitory storage

4395 Instr.

43100 Management and orchestration

4300

43225 Antenna(s)

43225 Antenna(s)

43200 Radio Unit

43210 Receiver

43220 Transmitter

43230 Control System

4330 HW

4360 Processing circuitry

4390-1 Memory

4395

4370 NIC

4380 Physical NI

4390-2 Non transitory storage

4395 Instr.

41

FIG. 27

**FIG. 28**

BEGIN

4610
Host computer
provides user data

4611
Host computer
executes host
application

4620
Host computer
initiates
transmission
carrying the user
data to the UE

4630
Base station
transmits the user
data

4640
UE executes client
application

END

**FIG. 29**

BEGIN

4710
Host computer
provides user data

4720
Host computer
initiates transmission
carrying the user data
to the UE

4730
UE receives the user
data

END

**FIG. 30**

**FIG. 31**

**FIG. 32**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120058748 A1
- US 20140220981 A1